# EUROPEAN PATENT APPLICATION

(11) **EP 4 730 145 A1**
(43) Date of publication of application: **22.04.2026**
(21) Application number: 24206990.4
(22) Date of filing: 16.10.2024
(51) Int. Cl.: G06F 15/173, G06F 15/80

(54) **PROCESSOR SYSTEM FOR PERFORMING NEURAL NETWORK COMPUTATIONS**

(71) Applicant: Euclyd B.V., 5656 AG Eindhoven (NL)
(72) Inventor: KASTRUP, Bernardo, 5656 AG Eindhoven (NL)
(74) Representative: V.O.

(57) **Abstract**

A processor system (1) is disclosed herein for performing neural network computations. The processor system (1) comprises a plurality of synchronously operating processor clusters arranged in a two-dimensional array, wherein a first plurality of processor clusters in a first column of the array are logically coupled to a second plurality of processor clusters in a second, directly adjacent column by at least one shared external bus. Each processor cluster comprises at least one processor unit including a programmable processor and an instruction memory, and further comprises a data memory. The processor system is configured to allow a first programmable processor of one of the first plurality of processor clusters to write a value to the at least one shared external bus and to allow a plurality of other programmable processors comprised in the second plurality of processor clusters to concurrently read the value from the at least one external bus.

## Description

### BACKGROUND

The present invention pertains to a processor system for performing neural network computations.

Artificial Neural Networks (ANNs), a.k.a. multi-layer perceptrons, have intrinsic control- and data-flow structures.
a. The intrinsic control-flow structure: each neuron in the neural network corresponds to a local computational thread, or program, that may comprise performing a dot-product, an activation function, and sometimes a normalization function such as SoftMax. Therefore, a lot of Thread-Level Parallelism (TLP) is intrinsically present in ANNs (namely, one thread per neuron).
b. The intrinsic data-flow structure: each neuron receives a data vector at its inputs, processes it, and produces a single value at its output, which then forms part of the input data vectors of neurons in the next layer. The same operations are repeatedly performed, regardless of the particular data values arriving at the neuron. A lot of Instruction Level Parallelism (ILP) is therefore present, unencumbered by input-data-dependent conditional branches.

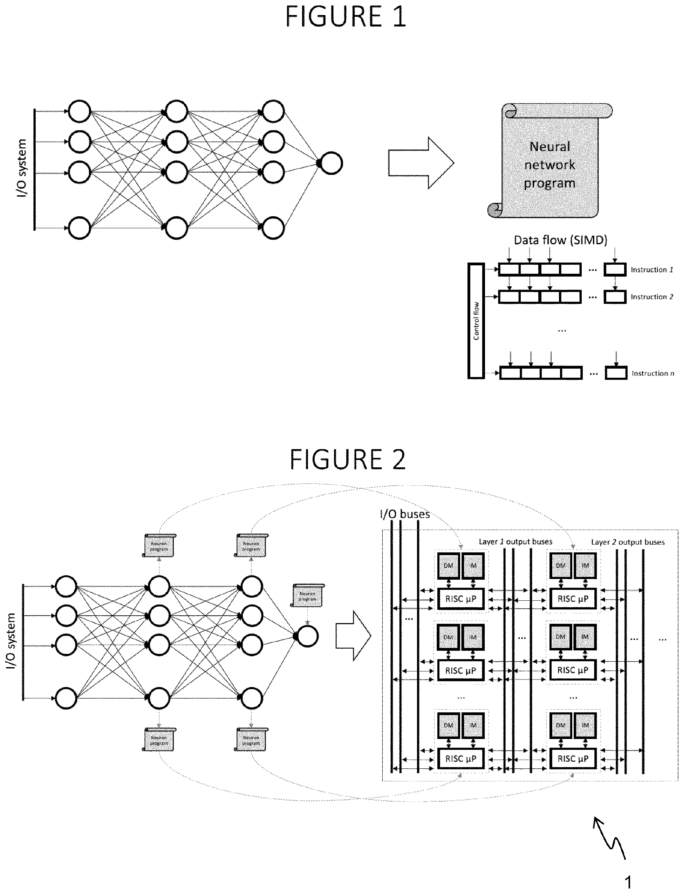

Today, GPUs are the preferred hardware implementation of ANNs. This technology has been available and matured for decades and provides for various applications, in particular for 3D graphics applications, a huge computation capacity. However, computationally speaking, GPU implementations do not preserve the intrinsic control- and data-flow structures of ANNs: they allow for very limited TLP (if any at all) and ILP mostly in the form of Single-Instruction Multiple-Data (SIMD) instructions (See FIG. 1), which are very limiting when compared to the flexibility of Multiple-Instruction Multiple-Data (MIMD) architectures. GPUs are thus suboptimal for ANN implementations.

### SUMMARY

It is an object of the present invention to provide a dedicated processor system that better exploits the potential for parallelism offered by ANNs.

This is achieved with the processor system as claimed in claim 1. The dedicated processor system specified therein comprises a plurality of synchronously operating processor clusters arranged in a two-dimensional array, wherein a first plurality of processor clusters in a first column of the array are logically coupled to a second plurality of processor clusters in a second, directly adjacent column by at least one shared external bus. It is noted that the two-dimensional array of processor clusters may itself be arranged in a vertical stack of two-dimensional arrays of processor clusters, therewith forming a three-dimensional array of processor clusters.

A processor cluster in the array comprises at least one processor unit that includes a programmable processor and an instruction memory. The processor cluster further comprises a data memory having a data memory address port and a data memory data port. The processor cluster has a first cluster internal bus that is accessible to the processor unit or each of a plurality of processor units and the first cluster internal bus is logically coupled to the data memory address port. The processor cluster further has a second cluster internal bus that is accessible to each of the processor units and that is logically coupled to the data memory data port.

The processor system is configured to allow a programmable processor of one of the first plurality of processor clusters to write a value to the at least one shared external bus and to allow a plurality of other programmable processors comprised in the second plurality of processor clusters to concurrently read the value from the at least one external bus. The programmable processor of a processor unit comprises one or more processor's internal bus(es), at least one of the one or more processor's internal bus(es) being logically coupled to the second cluster internal bus, and at least one of the one or more processor's internal bus(es) being logically coupled to at least one of the one or more shared external buses.

The claimed dedicated processor system optimally exploits the intrinsic control- and data-flow structures of an ANN in that the multiple processors in the array of processor clusters provide for multiple control-flow threads in the ANN, so as to exploit the available TLP. As discussed later the processor can have a Multiple-Instruction Multiple-Data (MIMD) instruction set architecture so as to the exploit the available ILP as well.

In the dedicated processor system a programmable processor of a cluster that performs neuron operations, typically in a time shared manner, uses the external bus to broadcast its output to other clusters. By way of example, each column of processor clusters is assigned to implement a respective layer of neurons in the ANN. Alternatively another allocation may be made dependent on the computational requirements and the number of neurons in a layer. For example, when a network layer does not fully 'occupy' all clusters of a column the remainder of clusters in the column can be used for a next layer.

In an embodiment the processor system further comprises a neural network mapper configured to supply the processor clusters of the processor system with configuration data for an artificial neural network, ANN. The configuration data comprises program data to be executed by the programmable processors of the processor clusters. Program data for said first programmable processor comprises at least one instruction to perform a first neural computation of at least a first neural element of a neural network layer of the ANN and the program data for said plurality of other programmable processors comprises at least one respective instruction to perform second neural computations of respective second neural elements of a subsequent neural network layer of the ANN and wherein the program data further comprises at least one further instruction that causes said first programmable processor to write a value resulting from the first neural computation to the at least one shared external bus and respective second further instructions that cause said plurality of other programmable processors to concurrently read the value from the at least one external bus in order to implement network connections from the at least a first neural element to the respective second neural elements.

In an example the dedicated processor system comprises dedicated configuration buses to enable the neural network mapper to load the program data of the respective programmable processors of the processor clusters in their respective instruction memories. Therewith the processor system can be easily reconfigured to implement another ANN. The neural network mapper may further be configured to update ANN parameter data, such as weights to be applied to the connections in a convolutional layer or in a fully connected layer. For that purpose the neural network mapper may be coupled by additional configuration buses to the data memories of the clusters. Alternatively, the instructions to perform the neural computation may already specify the weights.

It is noted that in some embodiments a neural network mapper may be absent. For example, the improved processor system may comprise a permanent memory for storing program data and parameter data. The data in the permanent memory may be a clone of program data and parameter data obtained by a different device. Alternatively, the improved processor system may have acquired the data itself in a training process.

In an embodiment of the processor system the second cluster internal bus is logically coupled to the at least one external bus and at least one of the one or more processor's internal bus(es) is logically coupled to the at least one external bus through the second cluster internal bus. Furthermore, therein the first cluster internal bus defines an address space with a first address range assigned for access to the data memory and a second address range for access to said at least one external bus. Therewith I/O transactions-e.g. via the associated external bus to other processor clusters or to an external device coupled to the external bus-are memory-mapped onto specific data memory address ranges. In an example thereof the at least one external bus is logically coupled to the second cluster internal bus via a controllable tristate multiplexer or demultiplexer that is controlled by logic connected to the first cluster internal bus. In that example, the logic connected to the first cluster internal bus controls the output-enable line of the tristate multiplexer or demultiplexer depending on the address value present in the first cluster internal bus.

In some embodiments an instruction set of the programmable processor comprises a first type of store instruction, with a first opcode, for writing to the data memory, and a second type of store instruction, with a second, different opcode, for writing to the at least one external bus, wherein the second type of store instruction takes longer to execute than the first type of store instruction. Therewith account can be taken of a relatively large capacitive load of the external bus, in case a programmable processor uses the external bus to distribute an output of a neural computation to a large set of further programmable processors.

An instruction set of the programmable processor may alternatively or additionally comprise a wait instruction causing the programmable processor to prolong the duration of execution of a store instruction issued prior to the wait instruction.

In an embodiment the at least one processor unit is one of a plurality of processor units and the processor units of the plurality of processor units share the data memory. Therewith a more efficient use of data memory in a processor cluster can be achieved. As the processor units of a processor cluster operate in a synchronized manner access by the processor units to the respective data memory can be scheduled in advance so that access conflicts are avoided. Provided that the number of processor units is modest, this will not have a serious impact on the performance of the processor units.

In an embodiment of the processor system the at least one processor unit comprises a decoding unit to decode an instruction from the instruction memory into an expanded format for controlling internal resources of the programmable processor. In one example the decoding unit has a first stage wherein a compressed instruction, e.g. being one byte wide, is decoded into a formatted instruction in a semantically meaningful format, i.e. comprising respective instructions fields for opcodes and operands, and a second stage wherein the formatted instruction is further decoded into the respective control signals for the internal resources. In another example the decoding unit directly decodes the compressed instruction into the respective control signals for the internal resources.

For a proper operation of the processor system it is necessary that the respective processors of the clusters perform their operations in a predictable manner, that is in a predetermined number of clock cycles. Therewith a programmable processor that has performed a neural computation can output the result of the neural computation to the appropriate external bus, while concurrently a plurality of programmable processor that implement respective neurons in a subsequent layer can read the outputted result from the external bus, so that they can subsequently perform the neural computations for these neurons. An exemplary programmable processor capable to perform its operations in a predictable manner comprises a three-stage pipeline, with an instruction fetch stage wherein an instruction is read from instruction memory and latched in an instruction register IR, an instruction decode stage wherein the instruction latched in the instruction register IR is translated into individual control signals for internal resources, said individual control signals being latched in a decoded instruction register DIR, and an execution stage wherein an operation defined by the control signals latched in the decoded instruction register DIR is carried out and its result stored in a dedicated register. The three-stage pipeline renders possible an efficient execution of neural network operations in three steps.

The output of the execution stage to which the input of the dedicated register is connected may be the output of an execution unit (such as an ALU or multiplier) or another internal resource of the programmable processor that produces an output result. In a further elaboration an output of the dedicated register is coupled to another register via a tristate buffer and a processor's internal bus and the tristate buffer has an output-enable line controlled by the instruction decoder in response to an instruction fetched from instruction memory. This way, the results of the execution unit can be moved or copied to general-purpose registers in a register file through the processor's internal bus, by register-to-register move or copy operations specified by a subsequent instruction in the program code.

In an embodiment of the processor system a programmable processor comprises at least one integer multiplier unit having a pipeline with the following components:
a Booth recoding stage;
a reduction of partial products stage;
an adder;
a dedicated result register;
a controllable tri-state buffer coupled to a processor's internal bus which can drive said processor's internal bus with the contents of the dedicated result register;
a multiplexing circuit to controllably select an input for the adder from either an output of the reduction of partial products stage or from the processor's internal bus.

The programmable processor provided with the integer multiplier unit as specified herewith can efficiently implement various ANN operations. I.e. it cannot only perform integer multiplications but also compute inner products. Still further the adder can be used independently to perform additions with an instruction that causes the multiplexing circuit to select an input for the adder from the processor's internal bus. In an example thereof, the processor's internal bus is controllably coupled to the second cluster internal bus via a controllable tristate buffer that has an output-enable line controlled by the instruction decoder in response to an instruction fetched from instruction memory.

In order to enable a programmable processor to 'broadcast' its result data to a large number of recipient programmable processor the external buses used for this purpose may be long. In connection therewith an embodiment of the processor system has at least one shared external bus that is actively terminated with a pair of a first termination diode and a second termination diode for each of its signal lines. Therein the first termination diode is configured to clamp the respective signal line to the associated ground reference voltage when the voltage level in said respective signal line decreases below the associated ground reference voltage minus a margin of tolerance. The second termination diode therein is configured to clamp the respective signal line to the associated power supply reference voltage when the voltage level in said respective signal line exceeds the associated power supply reference voltage plus a margin of tolerance. This measure mitigates signal reflections.

As discussed the processor clusters and therewith the associated programmable processors of the processor system are operated in a synchronous manner in order to enable data transfers from a first programmable processor that implements a neuron in one layer of the ANN to (a) second programmable processor(s) that implement(s) recipient neurons in a subsequent layer of the ANN. In this connection an embodiment of the dedicated processor system comprises a common clock oscillator for synchronizing operation of the processor clusters and the clock signal from said clock oscillator is distributed to the processor clusters by a set of traces constituting a clock tree, wherein the respective signal paths for conducting the clock signal from the common clock oscillator to respective ones of the processor clusters through the clock tree have substantially the same length.

According to a first option each processor cluster has a clock buffer to boost the clock signal received from the clock tree prior to distribution to the programmable processors within the processor cluster.

Alternatively or additionally, according to a second option all ends of the clock tree are actively terminated with a pair of termination diodes, so as to reduce signal reflections. Therein the first termination diode is configured to clamp the end of the clock tree to the associated ground reference voltage when the voltage level in said end tends to decrease below the associated ground reference voltage minus a margin of tolerance. The second termination diode is configured to clamp the end of the clock tree to the associated power supply reference voltage when the voltage level in said end tends to exceed the associated power supply reference voltage plus a margin of tolerance.

A very compact implementation of the improved processor system can be achieved with a wafer bonded pair of a first die and a second die, wherein the data memory is implemented on the first die and wherein the at least one processor unit and the first and the second cluster internal bus on the second die are electrically coupled with Through Silicon VIAs to the data memory on the first die. The compact implementation also renders possible that buses and clock traces can be shorter than in case of an implementation of the dedicated processor system on a single die. This also contributes to mitigating signal reflections.

### BRIEF DESCRIPTION OF THE DRAWINGS

These and other aspects are described in more detail with reference to the drawings. Therein:
FIG. 1 schematically shows an implementation of an artificial neural network ANN by a single instruction multiple data (SIMD) architecture;
FIG. 2 schematically shows a mapping of an artificial neural network ANN onto a processor system according to the present disclosure;
FIG. 3 shows an embodiment of the improved processor system in more detail;
FIG. 3A, 3B and 3C show other embodiments of the improved processor system in more detail;
FIG. 4 illustrates more details of a mapping of an artificial neural network ANN onto a processor system according to the present disclosure;
FIG. 5, 5A, 5B show effects of bus load on the time required for a digital signal transition;
FIG. 6 shows measures to mitigate signal reflections;
FIG. 7 schematically shows an exemplary clock tree for a synchronous operation of the improved processor system;
FIG. 7A schematically shows a single processor cluster of the improved processor system of FIG. 7;
FIG. 7B shows an optional feature for application in the clock tree of FIG. 7;
FIG. 8 schematically shows an implementation using a wafer bonded pair of a first die and a second die;
FIG. 9 and 10 show aspects of a prior art implementation of a programmable processor;
FIG. 11, 11A, 11B, 11C and 11D show aspects of an internal processor architecture in embodiments of the present invention;
FIG. 12 - 14 show examples of execution units in a programmable processor of the improved processing system.

### DETAILED DESCRIPTION

Like reference symbols in the various drawings indicate like elements unless otherwise indicated.

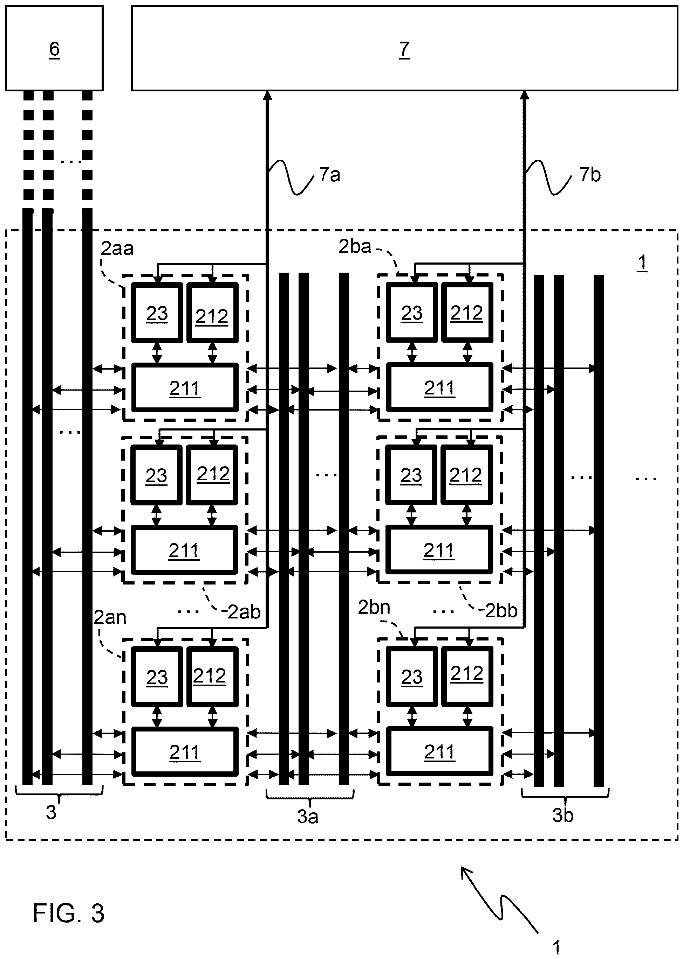

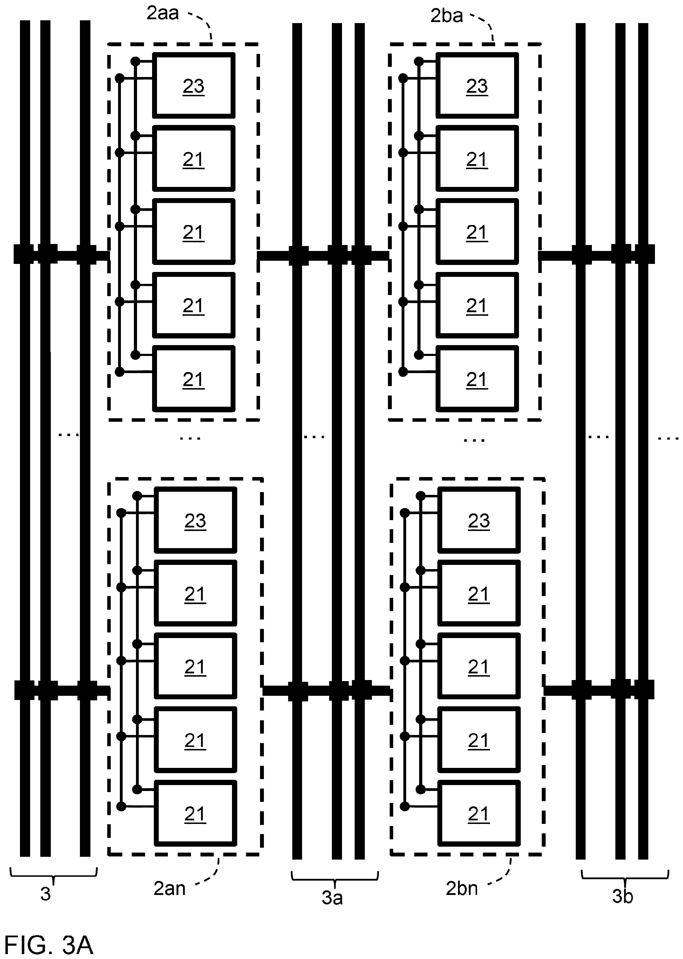

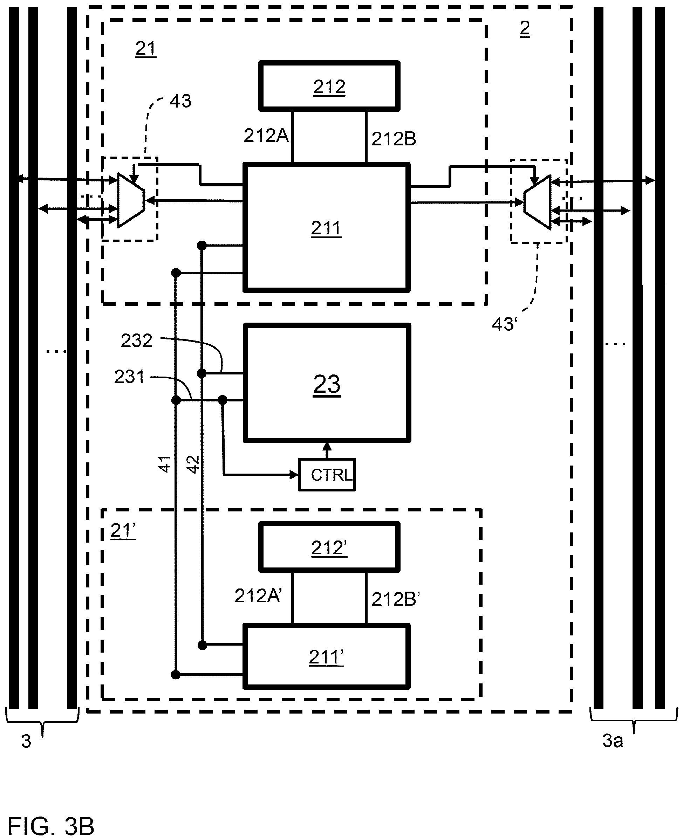

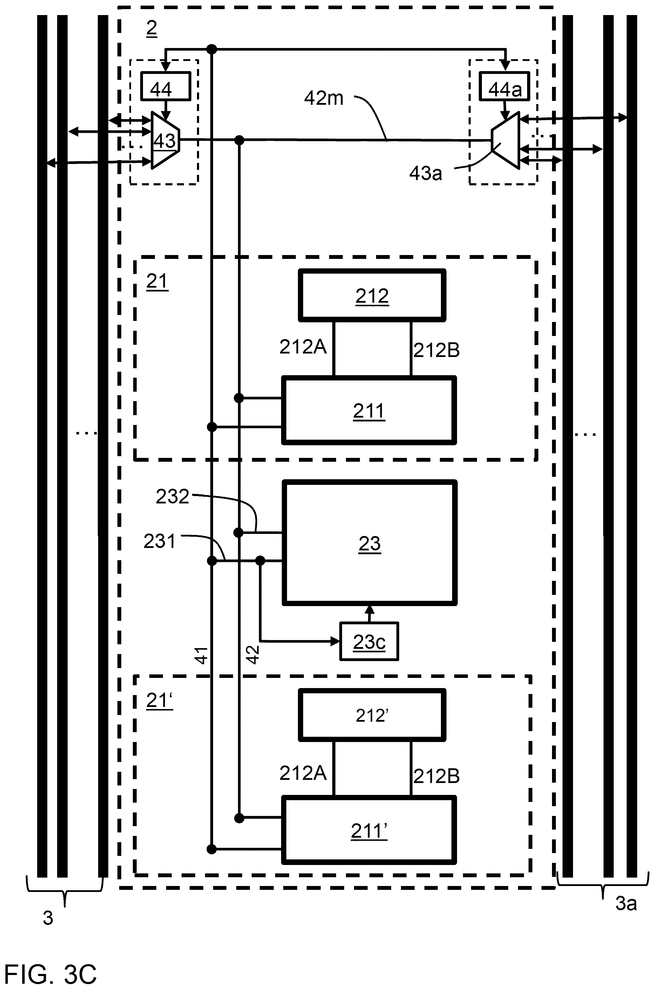

To optimally exploit the available parallelism, a dedicated processor system 1, forming an ANN hardware implementation is provided as shown in FIG. 2. An embodiment of the dedicated processor system is shown in more detail in FIG. 3. The dedicated processor system comprises a plurality of processor clusters 2aa, 2ba, ..., 2an, 2bn arranged in a two-dimensional array. An efficient communication structure is provided in that a first plurality of processor clusters 2aa, ..., 2an in a first column of the array are logically coupled to a second plurality of processor clusters 2ba, ..., 2bn in a second, directly adjacent column by at least one shared external bus 3a. Although, for the sake of clarity, only two columns of clusters are shown, it will be readily understood that the array can be extended with an arbitrary number of columns. For example, the second plurality of processor clusters 2ba, ..., 2bn may be logically coupled to a third plurality of processor clusters by the external bus 3b. Alternatively, the external bus may serve as an output bus to allow the dedicated processor system 1 to supply a neural network output to another device. An external bus is not exclusively restricted to one of these purposes. In some embodiments an external bus, e.g. 3a, may serve both to couple mutually adjacent columns of processor clusters 2ba, ..., 2bn and to provide (intermediate) output results to an external device. As shown in FIG. 3, the external bus 3, which is logically coupled to the first plurality of processor clusters 2aa, ..., 2an, is further coupled to a data source 6, e.g. a digital camera, a microphone, an internet connection, or other blocks of a System-on-a-Chip (SoC) of which the present processor system 1 is an element, so as to allow the dedicated processor system 1 to receive input data from the data source 6. FIG. 3 also shows a neural network mapper 7. As specified in more detail further in the description, the neural network mapper 7 is configured to supply the dedicated processor system 1 by configuration buses 7a, 7b with configuration data for the neural network to be mapped, such as network connections, neural network function information and neural network parameters. In some embodiments, the dedicated processor system 1 may also be configured to train a neural network and the neural network mapper 7 in that case may be further configured to read neural network parameters data of the trained neural network.

The processor clusters 2aa, ..., 2an, 2ba, ..., 2bn are highly optimized to perform in parallel neural network computations. Each processor cluster implements a subset of neural network elements of the neural network to be implemented. It would even be conceivable that each processor cluster 2 implements a respective neuron, but in practice it will most-often implement a group of neurons. By way of example, the first column of processor clusters 2aa, ..., 2an, may be configured to implement the neurons of a first layer of the neural network, the second column of processor clusters 2ba, ..., 2bn may implement a second layer, and so on. However, also other options are possible. For example, the first column of processor clusters 2aa, ..., 2an may implement both the first layer and the second layer, or a neural network layer may be implemented with two or more columns of processor clusters.

As schematically shown, a processor cluster comprises at least one processor unit. The processor unit includes a programmable processor 211 and an instruction memory 212. Therewith the programmable processor 211 can autonomously perform neural network computations associated with one or more neurons of the artificial neural network ANN. In an embodiment, the programmable processor 211 is a RISC microprocessor (RISC µP), so that it can perform the specified neural network computations in a predetermined number of clock cycles. As shown in FIG. 3, the configuration buses 7a, 7b of the neural network mapper 7 are coupled to the instruction memory 212 to provide the instructions for the operations that implement the one or more neurons of the artificial neural network ANN assigned to the programmable processor 211. The processor cluster also comprises a data memory 23 that is accessible to the programmable processor 211 for retrieving neural network parameter data and for storage of intermediate results. As also shown in FIG. 3, the configuration buses 7a, 7b of the neural network mapper 7 are further coupled to the data memory 23 to load the parameter data for the one or more neurons of the artificial neural network ANN assigned to the programmable processor 211. In some embodiments, the neural network mapper 7 is configured to read parameter data from the data memory 23, for example parameter data obtained by training an ANN implemented on the dedicated processor system 1 or obtained by fine tuning an ANN implemented on the dedicated processor system 1. In some implementations, a processor cluster may comprise a plurality of processor units that each include a respective programmable processor 211 and a respective instruction memory 212, but that share the data memory 23.

The neural network mapper 7 maps each neuron (i.e., each intrinsic thread) in the ANN onto a programmable processor 211 in the dedicated processor system 1. In the embodiment shown in FIG. 3, the programmable processors 211 are designed according to a Harvard architecture, whereby the respective data memory 23 and instruction memory 212 are separate, each with its own address space. This allows the programmable processor 211 to fetch an instruction at every clock cycle, undisturbed by, and potentially in parallel with, accesses to data memory 23. Also, each programmable processor 211 in the dedicated processor system 1 has its proper instruction memory 212. Also, in case a processor cluster 2 has more than one programmable processor 211, these programmable processors 211 will typically each have a proper instruction memory 212 within the cluster. Therewith, a programmable processor 211 can access instruction memory undisturbed by, and potentially in parallel with, the instruction memory accesses of other programmable processors 211.

In an embodiment, each programmable processor 211 also has its own private data memory 23 so as to have unrestricted data memory access. However, in practice, a modest number, e.g. 4, of programmable processors 211 may share a common data memory without involving a serious delay.

Typically, in an ANN, the output of each neuron in a given layer becomes an input to all-or at least a substantial subset of-neurons in the next layer to the right, as shown in FIG. 2. The embodiment in FIG. 3 is constructed to address the worst-case but common scenario wherein all neurons in a given layer must each receive the output of all neurons in the previous layer. That is, the output of each neuron is broadcast through an output bus to all neurons in the next layer.

In an embodiment, there are as many output buses, e.g. 3a, to connect any two subsequent layers in an ANN as there are programmable processors 211 in the broadcasting layer of processor clusters 2, e.g. the column of processor clusters 2aa, ..., 2an. This way, each programmable processor 211 has its own private output bus to broadcast its outputs to the programmable processors 211 in the next layer, e.g. the column of processor clusters 2ba, ..., 2bn.

In practice, however, there may be fewer external buses, e.g. 3a, than there are programmable processors 211 in the broadcasting layer, e.g. those in the column of processor clusters 2aa, ..., 2an. The fewer number of external buses suffices as the programmable processors 211 of a column of processor clusters 2 can be programmed to broadcast their output values at different times from other programmable processor 211 in the same column, which allows for a single bus to be time-multiplexed by more than one programmable processor 211.

As noted above, it is not always necessary that a programmable processor 211 accesses data memory at every clock cycle. Instead, a data memory may be shared by more than one programmable processor 211 through a shared data memory address and data bus. This is schematically illustrated in FIG. 3A, wherein each processor cluster 2aa, ..., 2an, 2ba, ..., 2bn comprises a plurality of processor units 21 that share a common data memory 23. The processor units 21 each comprise a programmable processor 211 and an associated instruction memory 212 as shown in FIG. 3.

In some embodiments, the programmable processor 211 is a RISC µP, preferably based on a Harvard architecture. In some examples of the embodiment, the programmable processor 211 has an instruction set with dedicated load/store operations for all data memory accesses and I/O transactions. In some examples, the I/O transactions-e.g. via the associated external bus to other processor clusters 2, e.g. processor cluster 2 of an adjacent column, or to an external device coupled to the external bus-are memory-mapped onto specific data memory address ranges.

FIG. 3B shows components of an exemplary processor cluster 2 in more detail. As shown therein, a processor unit 21 in the exemplary processor cluster 2 comprises a dedicated instruction memory 212 with respective Instruction Memory Address Bus (IMAB) 212A and Instruction Memory Data Bus (IMDB) 212B coupled to the programmable processor 211 of the processor unit 21. The exemplary processor cluster 2 comprises a second processor unit 21', also provided with a programmable processor 211' and an instruction memory 212'. The processor unit 21 and the processor unit 21' both have access to the data memory 23 via a Data Memory Address Bus 41 and a Data Memory Data Bus 42 that are coupled respectively to data memory address port 231 and a data memory data port 232 of the data memory 23.

The processor cluster 2 also has a controllable, `tristate-able' multiplexer/de-multiplexer 43' that allow the processor cluster 2 to read from/write to an external bus 3a. Whether the tristate-able multiplexer/de-multiplexer 43' functions as a multiplexer or a de-multiplexer depends on whether data is being read from an external bus 3a or written to it. In the example shown, the multiplexer/de-multiplexer 43' enables the processor cluster 2 to exchange data via the external bus 3a, for example to write data to one or more processor clusters 2 in a succeeding column or to receive data from a processor cluster 2 in the succeeding column. A transmission of data from a processor cluster in the direction of a succeeding column of processor clusters is for example used in a neural network inference computation, wherein output data from a neural network layer is forwarded to a next layer for further processing. A transmission of data in the reverse direction is for example used for back propagation during a training procedure. However, an ANN may alternatively be mapped in a reverse direction, such that the layers from input to output are arranged from right to left. In that case, data transmission during network inference computations is also from right to left, while back propagation would be from left to right. The processor cluster 2 discussed by way of example is only communicatively coupled with the external buses 3a. In other examples, the processor cluster 2 is coupled with external buses on both sides, e.g. both 3 and 3a (see e.g. multiplexer/de-multiplexer 43 in FIG. 3B, coupling to external bus 3). Processor clusters 2 in a column may be of mutually different types, for example only having access to a first external bus 3, a second external bus 3a, or to both external buses 3, 3a. It is further conceivable that processor clusters 2 have mutually different configurations in terms of the number of processor units 21, the type of processor units 21 and the size of their memories. In the example shown the access to the external buses 3, 3a is provided by a multiplexer/de-multiplexer 43, 43' coupled to the programmable processor 211 of the processor unit 21. The other processor unit 21' does not have direct access to the external bus 3a, but could still indirectly access the external bus 3a via the buses 41, 42 and the processor unit 21.

FIG. 3C shows another example of a processor cluster 2 wherein both processor units 21, 21' are capable of exchanging data via the external buses 3, 3a. This is possible because the cluster internal data bus 42 is coupled to each of the external buses 3, 3a. The cluster internal data bus 42 is coupled to the external bus 3 via a multiplexer/de-multiplexer 43 and to the external bus 3a via a further multiplexer/de-multiplexer 43a. The state of the multiplexers/demultiplexers 43, 43a is determined by a control element 44, 44a, respectively, which is responsive to an address signaled on the cluster internal address bus 41 by one of the programmable processors 211, 211'.

In a first case, a programmable processor, e.g. 211, signals an address in a first range that causes the control element 44 to bring the multiplexer/de-multiplexer 43 into a communicative state, such that data present on the cluster internal data bus 42 is output to the external bus 3. The data on the cluster internal data bus 42 may be provided by an output of the programmable processor 211. Alternatively, the output of the programmable processor 211 may be set into a high-impedance state, and the programmable processor 211 may instead cause the data memory 23 to provide output data on the cluster internal data bus 42 and therewith, via the multiplexer/de-multiplexer 43, onto an external bus 3. Still further, the programmable processor 211 may set the data memory 23 into a write-enabled state, so that data from the external bus 3 received via the multiplexer/de-multiplexer 43 is written into the data memory 23 at the address location specified by the contents of cluster internal address bus 41. In another case, the address signaled by the programmable processor 211 is in a second address range, having the effect that the control element 44 sets the multiplexer/de-multiplexer 43 into a high-impedance state (i.e., 'tristated'), thereby electrically isolating the cluster internal data bus 42 from the external buses 3. In this address range, the programmable processor 211 or another programmable processor 211' can exchange data with the data memory 23. A similar addressing scheme allows a processor 211 or 211' to exchange data via the multiplexer/de-multiplexer 43a with an external bus 3a or to allow access via the multiplexer 43a to the data memory 23. In a still further example, a data exchange between an external bus 3 and an external bus 3a is facilitated by providing an address on the cluster internal address bus 41 that causes both control elements 44, 44a to allow a data transmission via the bus section 42m that couples the cluster internal data bus 42 to the multiplexers/de-multiplexers 43, 43a.

It is noted that bus collisions are avoided in that the programmable processors 211, 211' of the processor cluster 2 operate in a synchronous, coordinated manner. As will be discussed in a further section, all programmable processors are controlled by a shared clock system and perform their instructions in a predictable manner; that is, in a manner wherein all instructions are statically scheduled prior to commencement of operation. The neural network mapper 7 provides the sequence of instructions to be stored in each of the instruction memories 212 of the programmable processors 211, such that it is avoided that two programmable processors attempt to write to a cluster internal bus 41, 42 or an external bus 3, 3a at the same time.

As noted above, typically each processor cluster 2 has a data memory 23 to be shared by all processor units 21 in the processor cluster by the cluster internal address bus 41 and the cluster internal data bus 42. As noted also, the cluster data memory 23 has control logic CTRL to decide whether the memory should be enabled or disabled based on the contents of the cluster internal address bus 41.

In the examples of FIG. 3B and 3C, the processor clusters 2 are symmetric with respect to accessing the external buses 3, 3a. Therewith, a processor cluster 2 can access both a preceding ANN layer, e.g. via an external bus 3, and a succeeding layer, e.g. via external bus 3a. As noted, one type of access, e.g. from left to right, can be for the purpose of inferencing in an ANN (i.e., from input to output layer). But during an ANN training procedure, this arrangement can also enable a data flow in the opposite direction to propagate an error from the output of the ANN back to the input layer, so that parameters (e.g. weights) can be adjusted according to a gradient-descent algorithm. Because of its symmetry, the scheme shown in FIG. 3B and 3C can thus implement both the training and the inference phases.

As noted, two or more processor units 21 may share a data memory 23 in a processor cluster 2. FIG. 3, for example, shows a configuration wherein four processor units 21 share a data memory 23. The ideal number of processor units 21 per processor cluster 2 represents a trade-off between data memory access bandwidth and the wasted cost of an idling data memory. The more processor units 21 are present in a processor cluster 2, the less likely is the respective cluster data memory to remain idle, but the higher the risk that multiple programmable processors 211 may want to access the cluster data memory concurrently. An analogous rationale applies to access to the external busses: the more processor units 21 are in a processor cluster 2, the more congested the access to the external busses (both to the left and to the right) through the cluster internal address bus 41 and the cluster internal data bus 42 will be. Although this may affect the efficiency, it does not affect the functionality, as the neural network mapper 7 coordinates all access events by the associated instructions to each of the programmable processors 211 and the programmable processors 211 execute these instructions in a predictable and synchronous manner.

The approach discussed above has an extra advantage when compared to GPUs: because there are many separate data memories in the system (namely, one per processor cluster 2), many parallel accesses to data-e.g., to the weights, or parameters, of the neurons-can be performed simultaneously. This is not the case in GPUs, wherein typically only one wide, large, expensive, dual-ported (video) memory is used. GPUs try to alleviate this memory access bottleneck by using very long data words. But this is only optimal with SIMD operations in 3D graphics applications; SIMD operations are limiting in flexibility for ANNs, as shown on the right side of FIG. 1. In the approach according to the present disclosure, many regular, cheap, single-ported data memories can be used to much greater effect in an MIMD architecture, as each of these single-ported memories can be accessed independently of, and in parallel with, all the others, leading to significant data memory access bandwidth and programming flexibility.

Modern ANNs can comprise millions of neurons. Each processor unit 21 of the dedicated processor system 1, in turn, when manufactured in modern semiconductor process nodes, can run at very high clock speeds at the megahertz range. Therefore, in a preferred embodiment, more than one neuron is implemented in a single processor unit 21, which is thus time-multiplexed. This reduces the amount of TLP exploited, but also reduces silicon costs since less processor units 21 are required in total. Moreover, the maximum TLP that can be sensibly exploited in the system is limited by the I/O bandwidth anyway (to deploy more processor units 21 than can be fed with data by the I/O system 6 is useless, as some of the processor units 21 will be starved of data and have to sit idling). Mapping more than one neuron per processor unit 21 allows for the optimal balance between usable parallelism and cost reduction through hardware time-multiplexing.

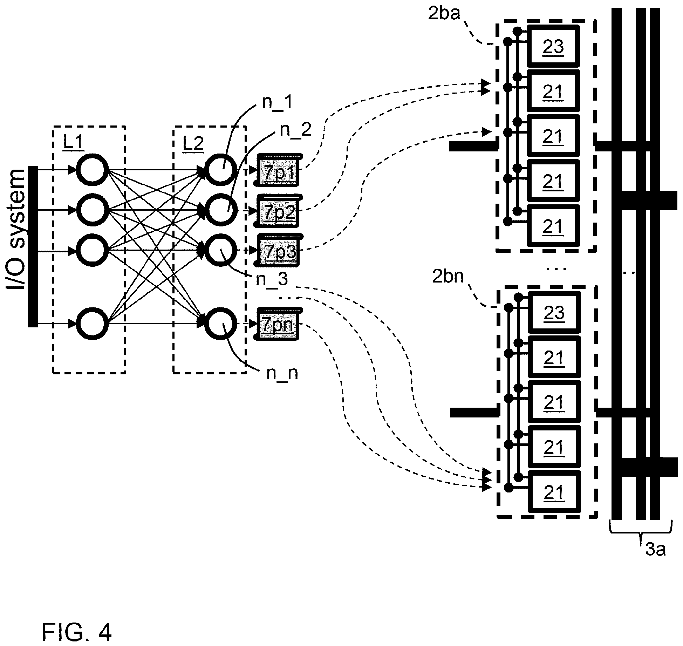

Preferably, the neurons that are time-multiplexed in a single processor unit 21 all belong to the same ANN layer. This way, it is likely that all said neurons will require the same inputs. Therefore, multiplexing them in one processor unit does not lead to extra I/O demands on the processor unit 21 when compared to the scenario in which only one neuron is implemented in it. This is shown in FIG. 4. By way of example, it is shown that the neuron programs 7p1 and 7p2 of neurons n_1 and n_2 respectively are mapped by the neural network mapper 7 into an instruction memory of a processor unit 21 in a cluster 2ba, while neuron program 7p3 is mapped by the neural network mapper 7 into an instruction memory of another processor unit 21 in the cluster 2ba. The neuron program 7pn of neuron n_n, in turn, is mapped, along with the neuron programs of two other neurons in the same layer, into an instruction memory of a processor unit 21 in a cluster 2bn.

In an ANN, an output result of a neuron in a layer is typically the input for a plurality of neurons in a subsequent layer. The plurality can be a modest number, e.g. in the case that the subsequent layer is a 3x3 convolutional layer, but in other cases can be a large number, e.g. if the subsequent layer is a fully connected layer. This implies that, in a processor system 1 as shown in FIG. 2, 3, 3A, 3B, 3C, for example, typically an output result of a programmable processor 211 of a processor cluster 2 in a column, e.g. processor cluster 2aa, may be read by a plurality of programmable processors 211 in the processor clusters 2ba, ..., 2bn of a subsequent column. This may involve a significant capacitive load of the external bus, e.g. 3a, because of the high number of connections to the bus 3a.

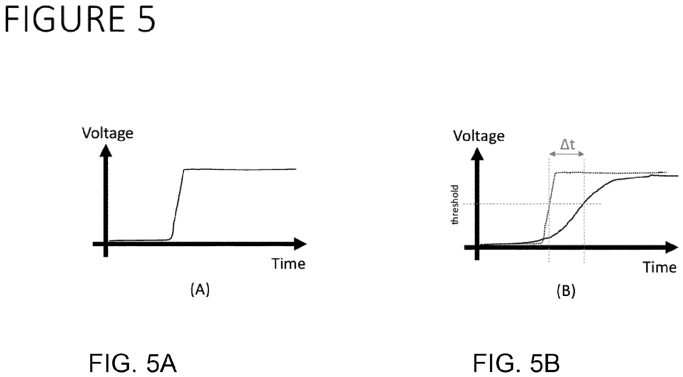

This, in turn, increases the time required for a digital signal transition in the external bus 3a to register, which is illustrated in FIG. 5: in FIG. 5A, a digital signal transition from zero to one is shown for a regular, mildly loaded bus; in FIG. 5B, in turn, the same signal transition is shown for a heavily loaded bus. An extra time interval Δt is required for the signal to cross the transition threshold. If the overall system clock period needs to be extended to accommodate this extra delay Δt, then the clock speed of the entire system will be brought down, reducing performance everywhere.

For this reason, prior art ANN implementations tend to avoid output buses altogether, despite the latter being the natural way to capture the intrinsic data-flow of ANNs and maximize the leveraging of the associated parallelism. Instead of external buses, these implementations typically use, e.g., point-to-point message-passing: a neuron in a first layer sends its output to only one neuron in the next, second layer. This latter neuron then passes the output to its neighbor in the second layer, which in turn passes it on to its neighbor, and so forth, until all neurons in the second layer have received the output. Obviously, while avoiding output buses, this approach is excessively inefficient and complex: it takes many cycles of message-passing for a single output value to go everywhere it is needed in the subsequent layer, let alone all output values from the previous layer. Moreover, scheduling the corresponding point-to-point message-passing operations around the rest of the neuron program, plus the operations that require the associated output values, becomes a very complex programming task. An output bus, on the other hand, simply broadcasts the output value everywhere it is needed, in one go, which is much simpler to program and faster to execute.

In sharp contrast thereto, the dedicated processor system 1 as disclosed herein provides the external buses 3, 3a, 3b, etc., to enable a neuron implemented by a processor unit 21 to broadcast its output result to a plurality of destination neurons of a subsequent layer implemented by processor units 21 of processor clusters 2 coupled to the external bus. The potential risk that the data transmission is jeopardized is mitigated according to one or more of the following measures.

According to a first measure, the processor unit 21 has programmable means to extend the wait time for output bus load (i.e., read) and store (i.e., write) operations. For example, both the processor unit 21 representing a transmitting neuron and the processor units 21 representing receiving neurons selectively extend the duration of their write operation and their read operations respectively. At configuration time, it is known by the neural network mapper 7 how many processor units 21 at the receiving side are physically coupled to the external bus 3a, for example. Therewith, the configured waiting time can have a short duration if the number of processor units 21 at the receiving side is modest, e.g. for a 3x3 convolution, and the configured waiting time can have a longer duration if the number is higher, e.g. for the case of a fully connected layer. As noted, the extension of duration selectively applies to the read and write operations. Other operations can be performed at the normal clock speed. Therewith, the system's overall clock frequency can remain unaltered, while the external bus load and store operations-and only these operations-take more than one system clock cycle to complete.

In an example, the programmable means to extend the wait time for external bus load and store operations is implemented in software by replicating the respective operations, in a sequence, in the assembly code of the communicating programmable processors 211. For instance, suppose that in the operation STORE $ADDR1 the address $ADDR1 corresponds to an external bus. The programmable processor 211 in a column implementing a next ANN-layer must execute a LOAD $ADDR2 in the same cycle-wherein $ADDR2 corresponds to the same external bus being used by the programmable processor 211 implementing the transmitting (broadcasting) neuron in the preceding layer-for the communication to complete correctly. In the assembly code of the programmable processor 211 that writes to the external bus, the operation can be duplicated, say, twice in sequence:
STORE $ADDR1
STORE $ADDR1
STORE $ADDR1
In the programmable processor 211 that reads from the external bus, the LOAD operation is duplicated the same number of times:
LOAD $ADDR2
LOAD $ADDR2
LOAD $ADDR2
Since the exact same operation is repeated three times in a row, the associated control signals will remain the same for three clock cycles, allowing for the extra delay Δt to elapse and the communication to be completed correctly. This scheme enables the optimal approach in a dedicated processor system 1 like the one shown in FIG. 2, 3, 3A, 3B, 3C (i.e., the use of external buses to broadcast signals from neurons in a given layer to the neurons in the next layer, despite the high capacitive load on the external bus).

In the embodiment of the previous paragraph, a disadvantage is that, at each occurrence of the LOAD operation, a register in the reading programmable processor 211 will latch the contents of the respective external bus (thus three times in the particular example above). Only in the last occurrence will the correct value be latched, and in all preceding ones (thus, twice in the particular example above) a random, transient value will be latched. Logically this is not a problem, as the random values will be overwritten by the correct one in the final latching. However, it does lead to extra power dissipation, as the states of the latching register will change each time a different value is latched.

Therefore, in another embodiment, in the program code of the programmable processor 211 that reads from the external bus blank operations (no-op, or NOP, wherewith the programmable processor simply waits idle) are added to match the initial occurrences of the STORE operation in the program code of the programmable processor 211 that writes to the external bus. Only the final STORE will be accompanied by the corresponding LOAD. This prevents an unnecessary power dissipation associated with latching transient values from the external bus. This way, the programmable processor 211 that writes to the output bus will still perform the same repetition of store instructions as specified in the preceding example, e.g.:
STORE $ADDR1
STORE $ADDR1
STORE $ADDR1
However, the programmable processor 211 representing the receiving neurons in the next ANN-layer that reads from the external bus will now do:
NOP
NOP
LOAD $ADDR2
Therein, $ADDR1 and $ADDR2 correspond to the same external bus (the addresses may be different in the respective program codes because, in the case of the writing programmable processor 211 the address corresponds to an external bus to the right, for example, while in the case of the reading programmable processor 211 the address corresponds to an external bus to the left, in this example). The NOPs simply wait for the contents of the output bus to stabilize before being latched.

In a preferred embodiment, instead of NOPs the reading programmable processor 211 simply executes other useful operations in its program code, while waiting for the final, matching STORE on the side of the writing programmable processor 211. This increases performance (the reading programmable processors 211 do not have to stay idle, as would be the case of a NOP, but do something useful instead). Also, this further improvement reduces the required instruction memory (as NOPs do occupy instruction memory space).

In other embodiments, a variety of hardware means can be conceived to implement the required delay, such as hardware counters to count up to a given number of clock cycles before issuing the next operation after the external bus STORE operation. This keeps the STORE frozen in the pipeline while the delay interval Δt elapses. It also avoids the STORE operation having to be duplicated in instruction memory. An advantage of the preferred embodiment in the paragraph above, however, is that it is entirely under software control, keeping the hardware logic simple at the cost of slightly increased instruction memory size. It also allows for the required delay to be defined empirically, after silicon is already available, by playing with the number of STORE operation duplications in software. Finally, it allows for only STORE operations to an external bus to be extended, without change to STORE operations to the respective cluster data memory (the latter are simply not duplicated in the code). Nothing else is affected by the delay interval Δt except the particular operations that cannot escape the delay.

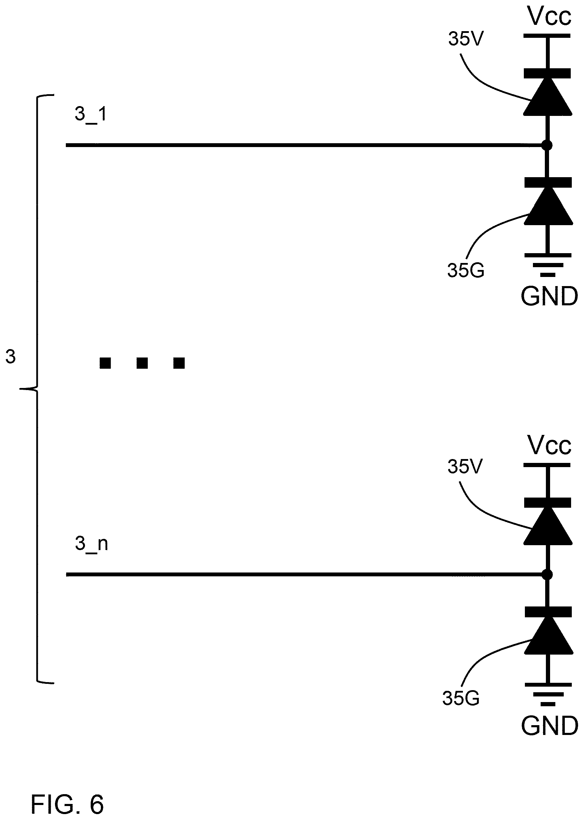

In some examples, wherein the external buses are relatively long, signal reflections may tend to occur therein. It may be contemplated to replace the external buses as shown in FIG. 2, 3, 3A, 3B, 3C, which extend over the full length of a column, by separate external bus sections. This would, however, also restrict the number of destination neurons to which a neuron in a preceding ANN-layer can broadcast its output data. In order to mitigate such signal reflections an embodiment is provided as shown in FIG. 6, wherein bus lines 3_1, ..., 3_n of an external bus 3 are actively terminated with a pair of diodes 35V, 35G per signal line. For example, a 16-bit bus in that case will have 32 diodes, two per bit: one diode 35V to clamp the line to Vcc when reflections cause the signal to overshoot Vcc by more than a given tolerance (namely, the forward voltage drop of the diode), and another diode 35G to clamp the line to GND when reflections cause the signal to undershoot GND by more than a given tolerance (namely, the forward voltage drop of the diode). This scheme, by itself known in the art, absorbs a significant portion of the reflections and enables the optimal approach in FIGs. 2, 3, 3A, 3B, 3C for example (i.e., the use of external buses to broadcast signals from neurons in a given layer to the neurons in the next layer). Unlike passive bus termination using, e.g., resistors and/or capacitors, active termination, as described herein, can be easily and efficiently incorporated into a digital CMOS integrated circuit die.

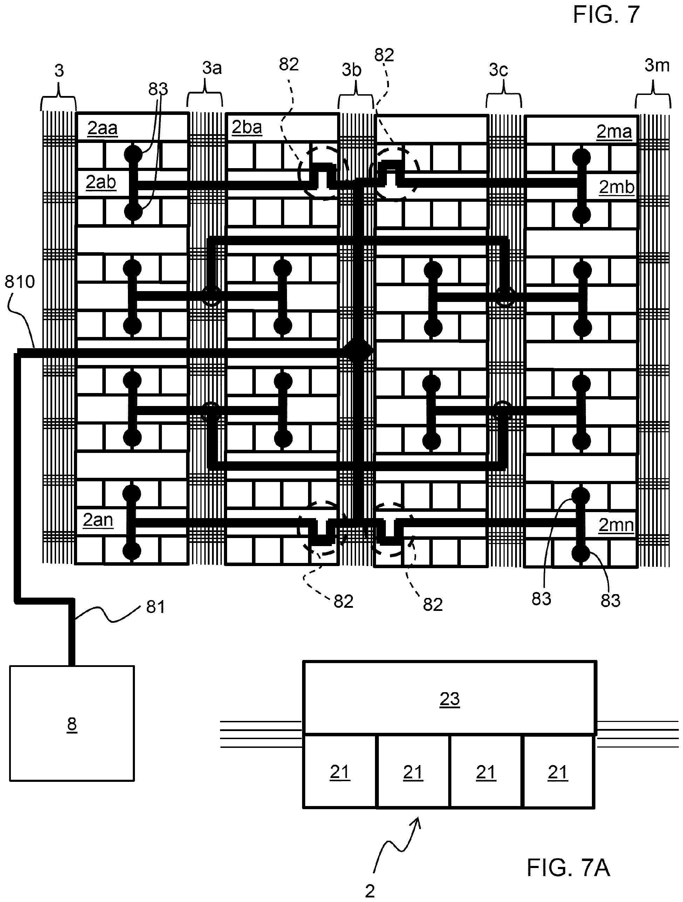

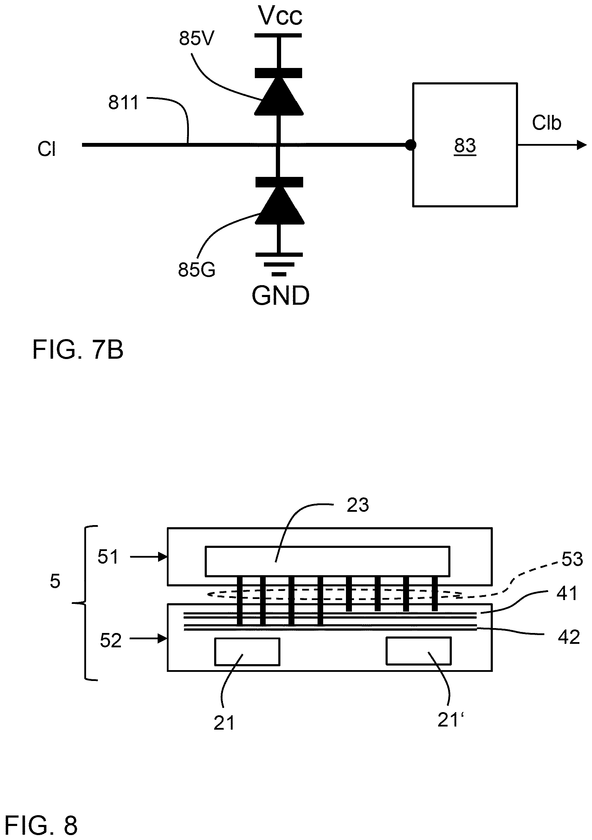

Note that the largest differentiated element in the embodiment shown in FIG. 2, 3, 3A, 3B, 3C is the processor cluster, e.g. 2aa, ..., 2an, 2ba, ..., 2bn, etc. The overall system therewith can be efficiently composed as a regular array of identical processor clusters replicated in two spatial dimensions. Therefore, in a preferred embodiment, backend VLSI design (also known as physical design) is optimized for one processor cluster, see e.g. FIG. 7A, and, from that point on, the system can be arbitrarily extended by copying-and-pasting that optimized design across the array and adding the external buses in between every two columns of processor clusters (see FIG. 7, wherein the particular dimensions and relative proportions of the layout shown are entirely arbitrary and merely illustrative).

This allows for a fast, efficient, low-effort, low-risk design of even very large ANN chips. It also allows the customization of the chip for specific applications and performance requirements simply by adjusting the number of processor clusters replicated in the final chip. Software multiplexing of different numbers of neurons per programmable processor 211 can be used to adjust the application code to arrays of different sizes (i.e., different numbers of processor clusters).

A potential issue in large processor systems is the occurrence of clock skew. This could result in a loss of synchronization. One option to address this is to avoid a large array by subdividing it into independently operating sub arrays. This has the disadvantage, however, that it complicates system design in that an increase of scale cannot simply be achieved by increasing the number of columns and rows in the array, but requires that additional interface sections are provided to facilitate an exchange of data between sub arrays. Another option would be to adapt the clock speed in large arrays to a lower frequency, such that still all clusters can operate in a synchronous manner. It will be clear that also this option is unattractive as this would imply that an increase of computational capacity obtained by upscaling the system would be partly or fully lost due to the reduced clock speed.

In the embodiment of FIG. 7 measures are also provided that facilitate upscaling while avoiding the need of subdivision or reduction of clock speed. This is achieved in that clock skew is mitigated by ensuring that the trace lengths from the external oscillator 8 to all processor clusters 2aa, 2ab, ..., 2an, ..., 2mn on the die, i.e. the leaves of the clock tree 81, are at least substantially the same, i.e. the difference in phase of the clock signal do not exceed 10% of the clock period. This can be ensured by measuring the trace length of the longest leaf in the clock tree 81, and then artificially increasing the trace lengths of all other leaves to match it. By way of example, FIG. 7 shows how the traces to the processor clusters 2aa, 2ab, 2an, 2ma, 2mb, 2an, 2mn have an artificial lengthening portion 82.

In the embodiment of FIG. 7, the trunk 810 of the clock tree 81, connected to the external oscillator 8, is first routed to the 2D center (indicated by the diamond shape) of the die from where it branches out to all processor clusters and respective programmable processors 211 comprised therein. One or more overlying metal layers can be used for this purpose. Routing the trunk 810 to the center of the die first reduces the amount of artificial lengthening 82 required to equalize all trace lengths. This is also shown in FIG. 7. Note that FIG. 7 is not complete: not all traces to all programmable processors 211 are shown. Also, the trace lengths actually shown in the figure may not be equal; the figure is merely illustrative of the technique described, not exhaustive or accurate.

With these measures it is rendered possible that even in a large array all processor clusters and their associated programmable processors operate on the basis of the same system clock, in a single clock domain. This allows for static (i.e., offline, at programming or compile time) scheduling of all operations and significantly simplifies the hardware when contrasted to uneconomical dynamic-scheduling approaches.

In cases where the size of the clock tree 81 is expected to be large, with long trace lengths, the clock signal in it may get attenuated. To circumvent this, in a preferred embodiment every processor cluster has a buffer 83 at its clock input so to boost the clock signal before distributing it to the programmable processors 211 within the processor cluster. This is illustrated by the dots 83 in FIG. 7 and shown in more detail in FIG. 7B. In FIG. 7B, the line 811 provides the clock signal from the clock tree 81 to the clock input of the processor cluster, where the buffer 83 boosts the clock signal Cl to a boosted clock signal Clb.

Still further, in the embodiment shown in FIG. 7B all leaves 811 in the clock tree 81 are also actively terminated with the two termination diodes 85V, 85G. Therewith, perturbation of the clock signal by reflections is mitigated in a manner analogous to what was described with reference to FIG. 6.

As schematically shown in FIG. 8, it is not necessary that all components of the dedicated processor system 1 are provided on a same die. In an example, the processor system is implemented in a wafer bonded pair 5 of a first die 51 and a second die 52. As shown in the example of FIG. 8 the data memory 23 of a processor cluster is implemented on the first die 51and the processor units 21, 21' of the cluster as well as their first and second cluster internal bus 41, 42 are implemented on the second die 52. Also shown are Through Silicon VIAs (TSVs, 53), with which the cluster internal buses 41, 42 are electrically coupled with the data memory 23 on the first die 51. This advanced 3D packaging solution increases yield and allows for tighter integration, as the memories are now vertically bonded and connected to the logic, allowing for a smaller 2D size of the chip.

In particular, in a large array of processor clusters a high silicon efficiency of the programmable processors 211 included therein is of utmost importance, i.e., a high computational performance with a small silicon footprint and low-power consumption is desired. Slight silicon inefficiencies in the programmable processors 211 would be compounded across the array, leading to significant economic penalties for the system as a whole.

It is thus preferred that the programmable processors have a micro architecture that is highly optimized for the target application: ANNs. Whereas microarchitectures known in the art, such as ARM's Cortex and RISC-V, are in particular designed for general-purpose applications, they are not particularly optimal for ANN computation purposes. In the sequel, various design aspects are discussed that contribute to an efficient implementation of an ANN by the dedicated processor system.

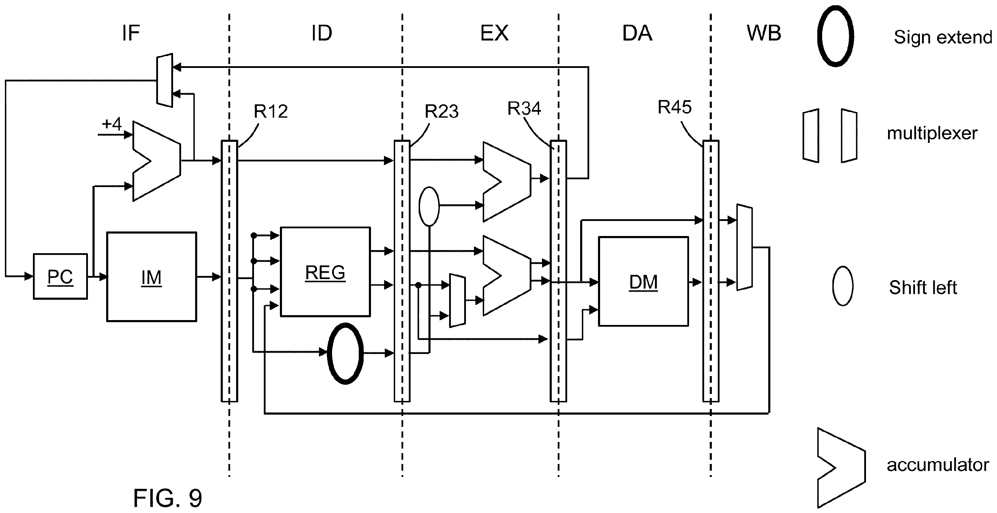

In RISC micro architectures known in the art, the RISC pipeline typically comprises at least 5 stages (see: Computer Organization & Design: The hardware/software interface [Second Edition], by David A. Patterson and John L. Hennessy, San Francisco, CA: Morgan Kaufmann Publishers Inc., 1998, page 449). As schematically shown in the FIG. 9, and explained in further detail with reference to FIG. 6.12 in the book referred to, the 5 stages in that case are:
a. Instruction Fetch (IF): wherein an instruction opcode is read from instruction memory;
b. Instruction Decode (ID): wherein the opcode is translated into individual control signals;
c. Execution (EX): wherein the operation(s) defined by the control signals is(are) carried out;
d. Data Access (DA): wherein data memory is accessed for writing the execution result or reading data for future instructions;
e. Write Back (WB): wherein the execution result or data read from data memory is written into the register file.
As shown in FIG. 9, the subsequent stages are coupled by registers R12, R23, R34 and R45.

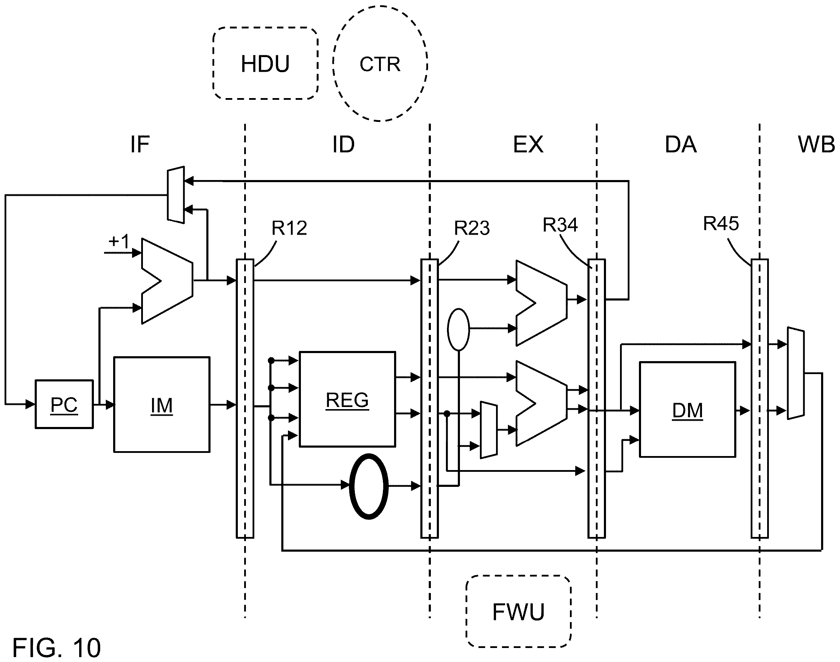

For today's standards, the micro architecture as illustrated in FIG. 9 is very simple and didactic. Much more complex micro architectures are routinely used today, even for the least demanding Internet of Things (IoT) applications. Yet, in a sea-of-processors approach, such as the one disclosed herein, this micro architecture is too complex and inefficient. Typically, the micro architectures known in the art require complex data- and control-hazard detection logic HDU, forwarding logic FWU, and extra control logic CTR as schematically shown in FIG. 10 and explained in more detail in the book referred to above with reference to FIG. 6.51. Not only does this additional logic render the processor complex and inefficient but also this leads to an unpredictable behavior; i.e. dependent on the data processed by the processor, the processor will perform its instructions with a different number of execution cycles, so that it is virtually impossible to achieve a coherent operation between the various processor clusters comprising the processors. Removing these stages can thus considerably simplify the RISC pipeline. But to do so, we need to first eliminate the need for such stages. The latter can be achieved by the following measures:
a. All data produced in the Execution stage (e.g., the output of an ALU, or multiplier, or any other execution unit) is automatically written into a dedicated, special-purpose register-for instance, a dedicated register to store the result of an ALU computation, another to store the result of a multiplication, etc. These dedicated registers are hardwired directly to the output of their respective execution units, thereby requiring no explicit addressing. Therefore, no general-purpose register needs to be specified as the destination of the respective ALU/multiplier/etc. operation (the destination is already hardwired), which eliminates the need for data-hazard detection logic, forwarding logic, and the entire Write Back stage. The contents of these dedicated special-purpose registers can then be explicitly moved or copied to a general-purpose register by a register move/copy operation later in the program code. This divides the process into two operations that can be controlled with respective instructions in the pipeline. Therewith, all required steps can be performed in the Execution stage alone, which is the key.
b. In a load-store RISC micro architecture, such as the one proposed herein, only dedicated memory access operations have access to data memory 23 (through cluster internal buses 41 and 42). All other operations comprise only reads from/writes to internal registers, be they general-purpose or special-purpose ones, but not data memory. Now, to eliminate the need for the Data Access stage, the memory access operations are configured to fit entirely within the Execution stage of the pipeline. To achieve this, the address calculation/definition is handled by a preceding instruction in the pipeline, and the resulting address placed in at least one dedicated, special-purpose register-henceforth called Address Register-whose sole function is to store an address to drive the cluster internal address bus 41. When the memory access operation per se is executed, the target address will thus already be in the Address Register, so only the latching of the value to be read/written is performed. This fits within the Execution stage of the pipeline and thereby dispenses with the Data Access stage. Like before, the trick here is to subdivide the memory access process into two instructions in the pipeline, so everything fits in the Execution stage.
c. The Program Counter (PC) register that addresses the instruction memory through the IMAB 212A is implemented with a simple built-in counter circuit for regular increments, and parallel-loaded with the contents of a separate, dedicated, special-purpose register, henceforth called Jump Address (JA) register, to perform a branch. Before executing the branch, the program code should contain another instruction to update the contents of JA with the desired branch address in advance of the branch operation. When the branch is executed, the contents of JA are simply parallel-loaded into the PC. This, once again, breaks up the branch procedure into two separate instructions in the pipeline (one for target address update in JA and another for the PC update proper, both of which fit in the Execution stage), gives control over hazard management to the software, and thereby avoids the need for hazard detection hardware, so that the processor executes its instructions in a predetermined number of execution cycles. Note that it is not necessarily a problem that the execution time of a program by the programmable processor 211 is dependent on conditional branches, as long as the dependency can be taken into account at the time of configuring the programmable processors of the dedicated processor system with their program data. In other words, it is not a problem that the program of a programmable processor 211 comprises conditional branch instructions as long as the branch conditions are statically determined (for instance, a count-down loop that counts down from a known starting value). Likewise, it is not a problem if the program comprises a for-loop if it is statically specified in the program how many times it is repeated.

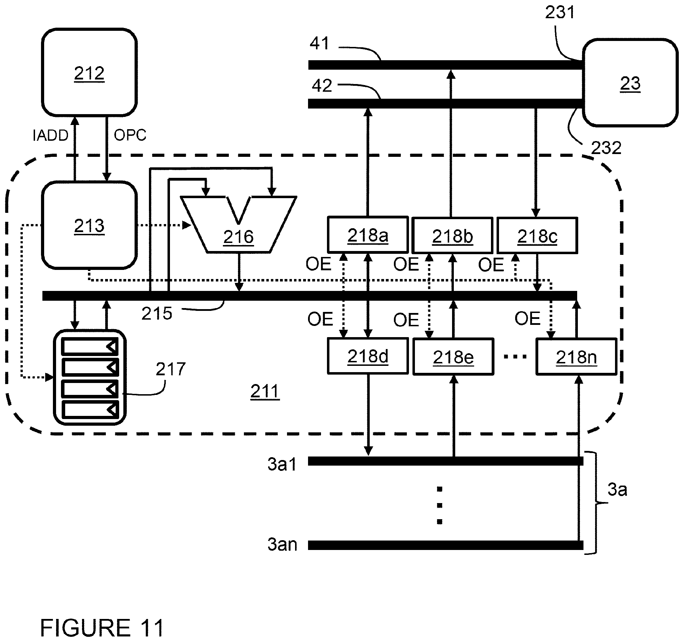

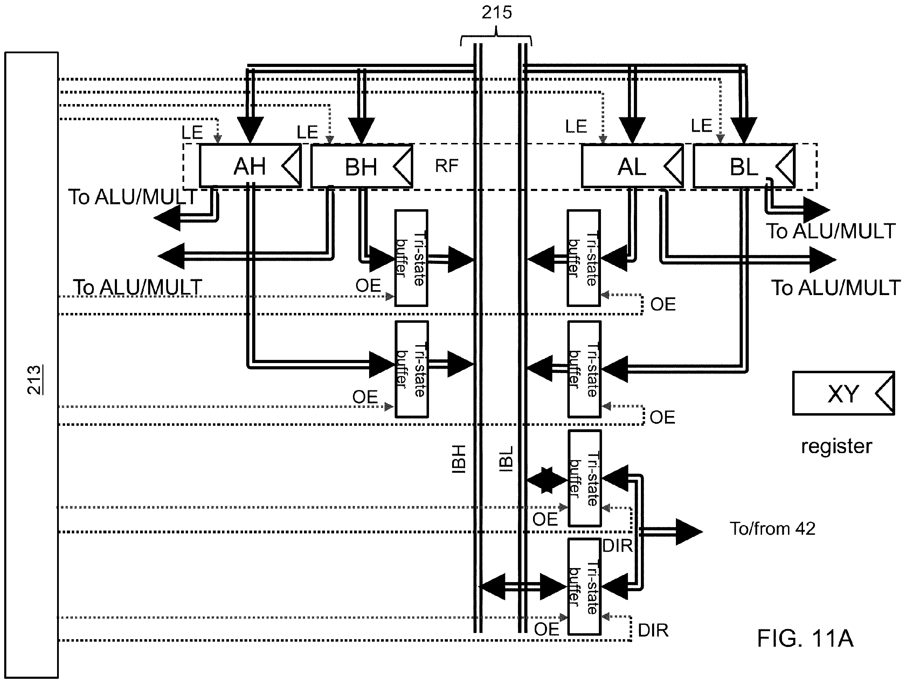

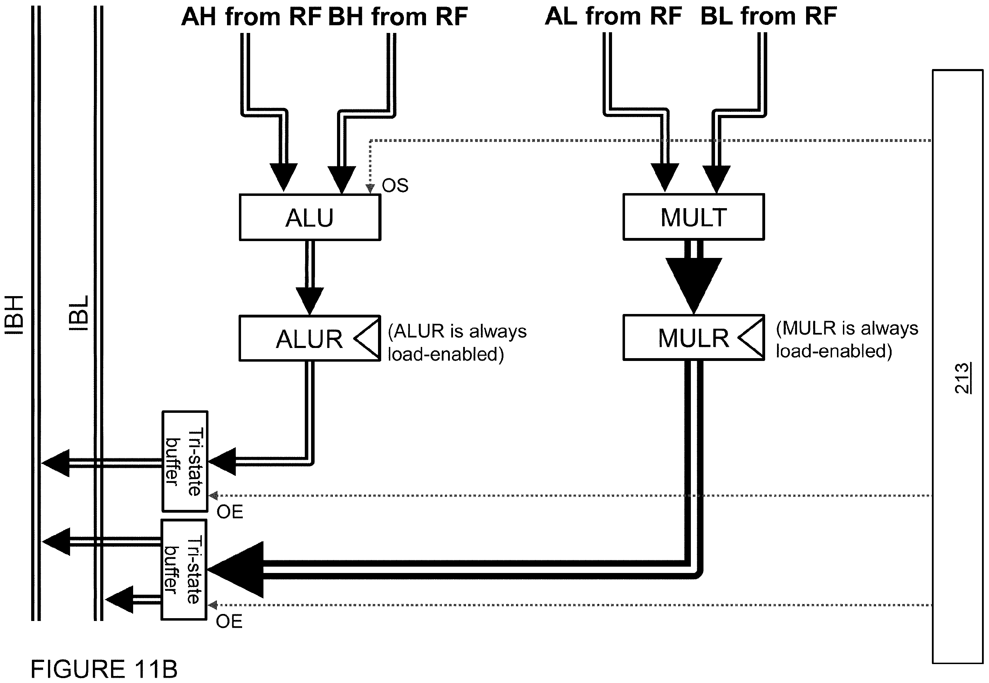

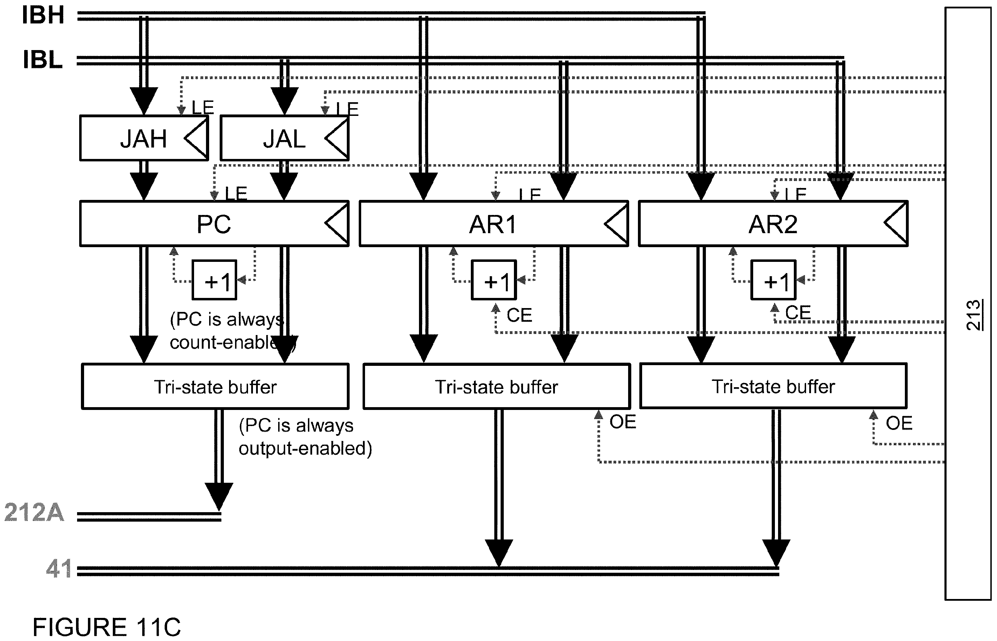

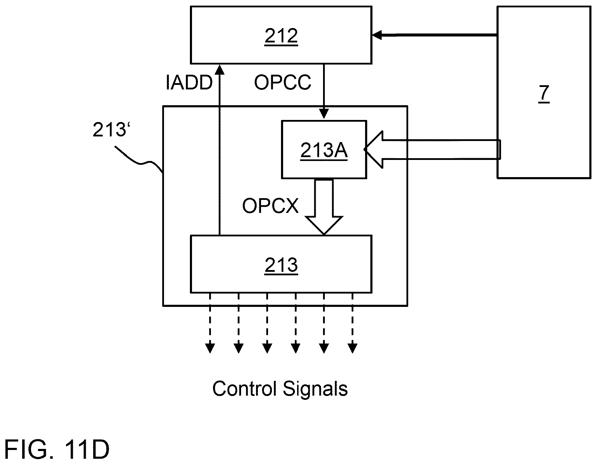

The three measures above can be implemented as per the programmable processor 211 embodiment illustrated in FIGs 11 and 11A to 11C. Therein, FIG. 11 shows an overview of this embodiment and FIG. 11A to 11C show specific aspects in more detail.

FIG. 11 schematically shows how the programmable processor 211 is coupled to other components, including the instruction memory which returns the instruction opcode OPC in the instruction memory address IADD specified by the instruction decoder 213. FIG. 11 further shows how the processor internal bus 215 of the programmable processor 211 is coupled to the cluster internal address bus 41 and the cluster internal data bus 42 by tri-statable buffer elements 218a, 218b and 218c. As shown for example in FIG. 2, 3, 3A, 3B and 3C, the cluster internal address bus 41 and the cluster internal data bus 42 give access to the data memory 23 of the cluster. In the embodiment shown, the processor internal bus 215 of the programmable processor 211 is also coupled to the external bus 3a by further tri-stable elements 218d, 218e, ..., 218n. The processor internal bus 215 can comprise more than one parallel buses, which can be accessed simultaneously. In one embodiment, the processor internal bus 215 comprises a high or most significant segment (Internal Bus High, or IBH) and a low or least significant segment (Internal Bus Low, or IBL), which can be written to and/or read from simultaneously and in parallel. In the embodiment shown, the programmable processor 211 further comprises a set of general-purpose registers 217 coupled to the processor internal bus 215. FIG. 11 further schematically shows an execution unit called ALU, or Arithmetic Logical Unit 216, for performing computations. In practice, a programmable processor 211 may comprise more than one execution unit and the execution units may be of mutually different types as elaborated below. For example, the programmable processor 211 may comprise an ALU and a multiplier as shown in FIG. 11B. Operation of the individual elements within the programmable processor 211 are controlled by the instruction decoder 213 in response to the opcode OPC fetched from the instruction address IADD in the instruction memory 212.

In FIG. 11A the following abbreviations are used.
LE: Load Enable
OE: Output Enable
DIR: DIRection
IBH: Internal Bus High
IBL: Internal Bus Low
RF: Register File

In FIG. 11A, a Register File (RF), denoted as 217 in FIG. 11, comprising four general-purpose registers AH, BH, AL, and BL is shown. The processor internal bus 215 in this case is divided into an Internal Bus Low IBL and an Internal Bus High IBH. The inputs of registers AH and BH are connected to the Internal Bus High IBH. AL and BL are connected to the Internal Bus Low IBL. When the instruction decoder 213 issues an active Load Enable (LE) control input to a register, the register will latch the contents of the bus to which its input is connected in the next rising edge of the clock. The LE signal from the Instruction Decoder 213 corresponds to the decoded opcode being executed. The outputs of the general-purpose registers are connected back to their respective internal buses IBH, IBL through tri-state buffers. When a buffer is output-enabled (i.e., when the respective OE signal from the decoded opcode is active), it drives the respective bus with the contents of the respective register. The processor internal buses IBH, IBL are also connected to the cluster internal data bus 42 through bi-directional tri-state buffers, so their contents can be stored in the cluster data memory 23 or read out from it. The DIR, or direction, signal controls the directionality of the transaction (i.e., whether the contents of an internal bus IBL, IBH drive the cluster internal data bus 42 or the other way around). Finally, the general-purpose registers AH, BH, AL, and BL are also directly wired to the inputs of the execution units shown in FIG. 11B, bypassing the processor internal buses.

In FIG. 11B the following abbreviations are used:
OE: Output Enable
OS: Operation Select
ALUR: ALU Result
MULR: MULtiplier Result
DIR: DIRection
IBH: Internal Bus High
IBL: Internal Bus Low
RF: Register File

FIG. 11B shows in more detail an embodiment of an execution unit set comprising an ALU and a MULtiplier. Their respective inputs are hardwired directly to general-purpose registers 217 in the Register File (see FIG. 11). The particular operation to be performed by the ALU (e.g., addition, subtraction, comparison, etc.) is determined by the Operation Select (OS) bit(s) provided by the instruction decoder 213. The multiplier always multiplies. The results produced by the execution units are automatically latched by dedicated, special-purpose registers ALUR and MULR. These registers are always load-enabled, so they latch the output of their respective execution unit at every rising edge of the clock. This way, the result operand of ALU and multiply operations is already hardwired and does not require a Write Back stage; the 'write back' happens already in the Execution stage. The contents of registers ALUR and MULR can be used to drive the internal buses IBH, IBL through tri-state buffers controlled by signals OE from the Instruction Decoder 213 as a result of decoding an opcode OPC from the instruction memory 212. Note that the output of the multiplier MULT has double the bit-width of its input operands, and thus must be written to both internal buses IBL, IBH concurrently. This way, the results of ALU and multiply operations can be moved or copied to general-purpose registers 217 in the Register File RF (See FIG. 11) through the internal buses IBL, IBH, by register-to-register move or copy operations specified by a subsequent instruction in the program code.

In FIG. 11C the following abbreviations are used:
LE: Load Enable
OE: Output Enable
CE: Count Enable
IBL: Internal Bus Low
IBH: Internal Bus High

FIG. 11C shows an embodiment of the memory addressing logic. A dedicated special-purpose register JA (Jump Address) holds an address value that can be parallel-loaded into the PC (Program Counter) at the next rising edge of the clock when the Load Enable (LE) control signal of the PC is active. The two halves of JA (if JA is 16-bit wide, these two halves would be the high byte and the low byte of JA) can be referenced separately as JAH and JAL, respectively connected to IBH and IBL. This allows for only one half of JA to be updated at a time (e.g., by a register-to-register move or copy operation that loads JAH or JAL with the contents of one of the general-purpose registers AH, BH, AL, or BL), if the other half already contains the desired value. The PC has a built-in counter ("+1" in FIG. 11C) that always increases the value in the PC by one at every clock cycle (i.e., the PC is always count-enabled, otherwise the next instruction in instruction memory wouldn't be fetched and the programmable processor 211 would grind to a halt), unless a parallel-load from JA is performed (the latter overwrites the counter). For the same reason, the PC is also always output-enabled, so to always drive the IMAB 212A. Note that the PC only addresses the instruction memory 212 (See e.g. FIG. 2, 3, 3A, 3B, 3C). Other dedicated special-purpose register(s) are provided to address the cluster data memory 23. In the embodiment of FIG. 11C, these are AR1 and AR2 (Address Register 1 and 2, respectively). In the example shown, these, too, have built-in counters to facilitate reading/writing from/to large blocks of contiguous addresses in data memory 23 without ALU intervention for address updates (this increases the opportunity for ILP/MIMD instructions, as will be discussed below). Whether or not the contents of AR1 and AR2 are updated through counting is determined by the respective Count Enable (CE) signals coming from the decoded opcode in the Instruction Decoder 213. When CE is active, the built-in counter counts at the next rising edge of the clock. The contents of both AR1 and AR2 can also be parallel-loaded from the internal buses IBL, IBH when the respective Load Enable (LE) signals are active. Two Address Registers AR1, AR2 are used so two different regions of the data memory 23 can be traversed simultaneously: one where data is read from for processing, and the other where processed data is written to. Which, if any, of the Address Registers AR1 and AR2 drives the cluster internal address bus 41 is determined by the OE signals of the respective tri-state buffers.

Note that, in FIGs. 11, 11A, 11B and 11C, the clock signal is not explicitly shown for the sake of simplicity and clarity, but it is implicitly understood to always be connected to every register AH, BH, AL, BL, JAH, JAL, PC, AR1, AR2.

The embodiment illustrated in FIGs 11, 11A, 11B and 11C shows an area-efficient implementation of a programmable processor 211 suitable for use in the dedicated processor system 1 in order to perform ANN computations in a manner that exploits instruction-level and thread-level parallelism. It is noted that the Instruction Fetch and Instruction Decode stages of the respective 3-stage pipeline (plus the respective control logic for halting, resetting, etc.) are comprised in the instruction decoder 213 and not explicitly shown in the figures, as they are known to any practitioner skilled in the art.

It is noted that, at any given rising edge of the clock, all registers, shown in FIGs 11, 11A, 11B and 11C as rectangles having a triangular indent, can latch new values. This means that several different operations can be executed in parallel, simultaneously. For instance,
a. AH can latch the value on the IBH while BH is driving the IBH with its contents (copy from BH to AH);
b. Concurrently, AL can latch the value on the IBL while BL is driving the IBL with its contents (copy from BL to AL);
c. Concurrently, ALUR and MULR can latch the results of an addition and a multiplication, respectively;
d. Concurrently, the contents of AR1 and AR2 can be incremented by a count of 1;
e. Concurrently, the PC can be parallel-loaded with the contents of JA (a branch).

The above means that the programmable processor 211 embodiment shown in FIGs 11, 11A, 11B and 11C, despite being extremely simple and minimalistic, can execute several monadic operations per instruction (i.e. per opcode OPC fetched from instruction memory), in parallel. These operations can consist of register-to-register operations, memory access operations, and ALU/Multiplication operations. The proposed embodiment is thus capable of exploiting significant levels of MIMD parallelism (Multiple-Instruction Multiple-Data parallelism, which in this case would be better described as "multiple-operation multiple-data" parallelism). This combination of hardware austerity and vast ILP capabilities renders it ideal for the system architecture as described with reference to the FIGs 2, 3, 3A, 3B, 4 and 7. In the sequel, the convention will be used that every opcode in instruction memory 212 corresponds to an *instruction,* while within the instruction several *operations* can be encoded in parallel, as discussed above.

In practice, MIMD instructions that exploit large amounts of ILP may involve very long instruction opcodes. For example, even for low-performance applications 128-bit opcodes of VLIW and Superscalar microprocessors may not be unusual. This, in turn, would involve a relatively costly, large-width instruction memory 212 associated with the programmable processor 211. This happens because, typically, each monadic operation in the instruction opcode OPC has its own 'mini-opcode' and operands encoded separately. For instance, if only two operations are encoded in the instruction opcode OPC, one would typically see something like the following bit-fields: miniopcode1 | source 1 | source2 | destination1 | miniopcode2 | source3 | source4 | destination2, wherein 'source' and 'destination' specify source and destination registers, respectively. Depending on how many different operations the programmable processor 211 is capable of, and how many registers are present, each of these bit-fields could easily require 3 to 6 bits, or even more. Instructions encoding 5 or 6 operations, instead of just 2, would thus require many bits and expensive, wide instruction memories 212. This is particularly relevant in that in the proposed dedicated processor system 1, each processor cluster has one or more programmable processor 211, each having their proper instruction memory 212.

In an embodiment of the dedicated processor system 1, a high level of instruction level parallelism requiring only a modest instruction memory width is provided in that the instruction opcode OPC does not comprise separate bit-fields with their own particular semantics (i.e., the meaning determining whether a given set of bits corresponds to a mini-opcode, or a source register, or a destination register). This is rendered possible with a modified instruction decoder (213') as shown in FIG. 11D. In the embodiment shown therein, the modified instruction decoder 213' comprises an instruction decompression section 213A and a conventional instruction decoding section 213, which addresses the instruction memory 212, as specified before. In the embodiment shown, the neural network mapper 7 does not provide the instruction memory 212 with the full specification of each instruction, which would comprise all fields-i.e. all mini-opcodes, source registers, and destination registers. Instead, it provides the instruction memory 212 with a reference OPCC that enables the instruction decompression section 213A to reconstruct the full specification OPCX of each instruction that is further decoded by the conventional instruction decoder 213 into control signals (such as LE, OE, DIR, and OS in FIGs 11A, 11B and 11C) to the various processor elements (such as execution units, counters, registers, tristate buffers, etc.). In the embodiment shown, the instruction decompression section 213A comprises a look-up table that specifies for each reference OPCC the associated full instruction specification OPCX. The neural network mapper 7 may load the look-up table in a configuration stage or the look-up table may already comprise fixed contents predefined in hardware. In summary, in the embodiment shown in FIG. 11D, the decoding of the reference OPCC is performed in two stages, i.e. a decompression stage 213A that converts the reference into formatted instructions OPCX and a second stage 213 that converts the formatted instructions OPCX into the various control signals.

Because the look-up table in decompression section 213A is a universal decoder, in a preferred embodiment the full specification OPCX produced by the look-up table already comprises the appropriate control signals (such as LE, OE, DIR, and OS in FIGs 11A, 11B and 11C), so that no further decoding by the conventional instruction decoder 213 is required. In this preferred embodiment, the conventional instruction decoder 213 simply passes on the control signals already comprised in OPCX to the various processor elements. Alternatively, instead of a look-up table, Karnaugh maps can be used to devise combinatorial logic to perform the decoding in an analogous manner. In all cases, the key is that a truth-table is specified between a monolithic instruction opcode and the respective decoded control bits. This monolithic, all-fields-encoded-together approach allows for maximum efficiency for instruction set encoding, and therefore the narrowest and cheapest instruction memories.

The embodiment in the previous paragraph is made possible by the pipeline simplifications shown in FIGs 11, 11A, 11B, 11C and discussed earlier, as traditional 5-stage+ RISC pipelines, with control- and data-hazard detection logic, forwarding logic, etc. (see FIG. 10 again), require the instruction opcode to have separate fields, each with its own semantics, to operate. It is the removal of the Data Access and Write Back stages of the pipeline, as discussed in the foregoing, that enables the 'encode-it-all-together' approach of the previous paragraph.

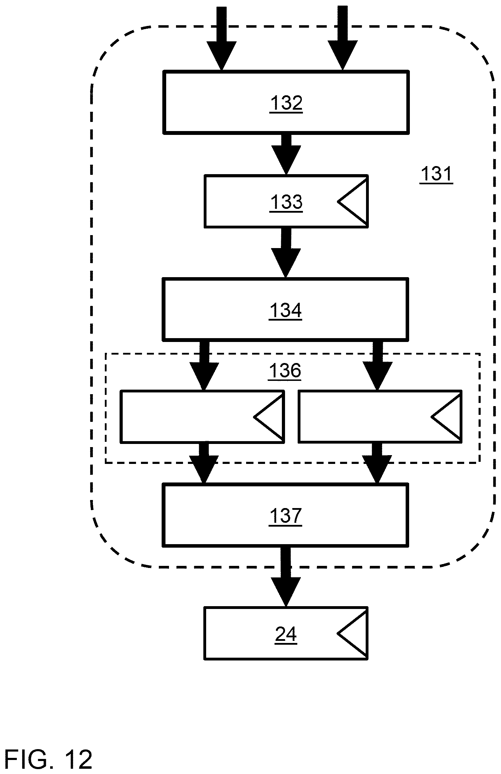

In some embodiments, a programmable processor 211 may have execution units, e.g. ALU and MULT in FIG. 11B, with mutually different execution times. It is desired that the ALU and multiplier operations (or any other analogous logic/arithmetic operation, such as a barrel shift) start and complete in the Execution stage of the pipeline. As such, this can be achieved by choosing an overall system clock period that is long enough to allow all operations to complete in a single clock cycle. However, this would imply that complex logic/arithmetic operations, such as multiplication, become the speed bottleneck of the system and drag the clock frequency down for everything else. In an advantageous embodiment, this is avoided in that the Execution stage of the RISC pipeline is itself pipelined. For instance, as known in the art, a multiplication operation can typically be subdivided into three phases: Booth Recoding (BR), Reduction of Partial Products (RPP), and Carry-Propagate Addition (CPA). In the advantageous embodiment as shown in FIG. 12, registers are added to store the partial results produced by BR and RPP, so that the multiplier is pipelined in these three stages. In the embodiment shown, register 133 stores the partial results produced by the Booth Recoding stage 132, and the registers 136 store the partial results produced by Reduction of Partial Products stage 134. The Carry-Propagate Addition stage 137 further processes these partial results and provides its output to the dedicated register 24, corresponding to MULR in FIG. 11B. Note that this is not analogous to having the original Data Access and Write Back stages of the RISC pipeline back; the result does not require a return of Forwarding Logic, Data- and Hazard-Detection logic, etc. Instead, the result is still entirely comprised within the Execution stage of the RISC pipeline, as far as the programmable processor's control logic is concerned; it's just that the Execution stage itself is now pipelined. This eliminates the clock frequency penalty that complex execution units-such as multipliers- could otherwise lead to.

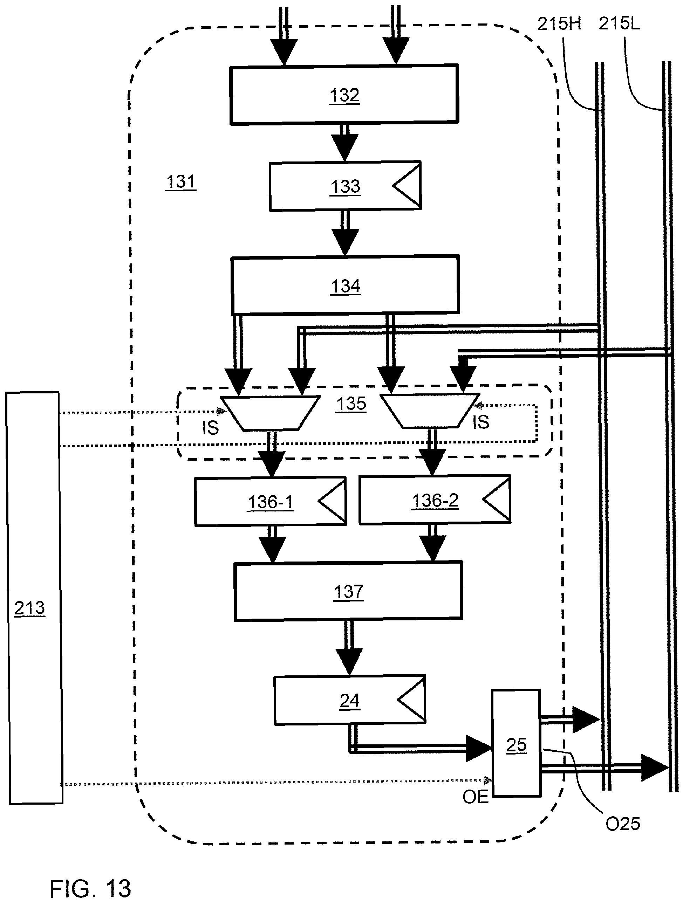

A still further advantageous embodiment is shown in FIG. 13. Parts therein corresponding to FIG. 12 have the same reference. In the embodiment of FIG. 13, the resources/pipeline registers comprised in a stage of a pipelined execution unit-such as the multiplier discussed in the previous paragraph-are exposed to the programmable processor's internal buses 215H, 215L, corresponding to IBH and IBL in FIG. 11B respectively, so they can be independently reused by other operations too. For instance, the final stage of the pipelined multiplier discussed above with reference to FIG. 12-namely, CPA-effectively comprises an entire and fully-functional, two-operand Adder. By exposing the RPP/CPA registers 136_1, 136_2 of the multiplier's pipeline (which hold the two input operands of said Adder) to the internal buses 215H, 215L and allowing register-to-register move/copy operations to load values into these registers, the Adder 137 can be used as a standalone adder, to carry out addition operations, not just as the final stage of the multiplication operation. In the embodiment shown, the RPP/CPA registers 136_1, 136_2 can be selectively exposed to the programmable processor's internal buses 215H, 215L by control signals IS (Input Select) from the instruction decoder 213 to the multiplexing unit 135. Therewith, the Adder 137 can be programmably used as CPA of the multiplier or as a separate, independent adder. The dual use of the Adder 137 allowed by this embodiment is important in the context of the present invention, as it maximizes the silicon efficiency of the programmable processors 211, which gets compounded across the large array of many processor clusters 2. The execution unit 131 of FIG. 12 can further selectively access the internal buses 215L, 215H dependent on the control signal OE to the tri-state buffer 25 having its output O25 coupled to the buses.

Once again, clock lines are not shown in the figures, but it is implicitly understood that all registers are connected to the clock.

A challenging issue is how to adapt the micro architecture of the programmable processor 211 to more general computations required, e.g., by LLMs such as ChatGPT. In regular ANNs (e.g. for pattern recognition in vision applications), there are only two types of computation: dot-products and table look-ups for the (non-linear) transfer function. For these, the micro architecture can be built around a pipelined, Floating-Point Multiply-ACcumulate (FPMAC) unit that is essentially a circuit dedicated to dot-products. But LLMs also require functions such as SoftMax normalization, which also entail floating-point operations.

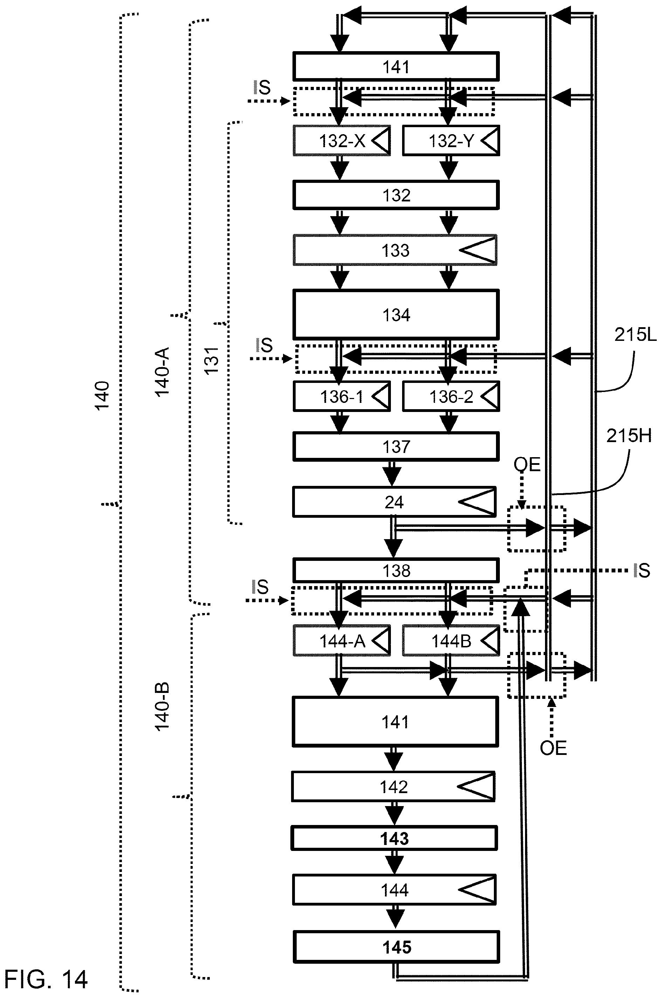

To facilitate such operations, a further embodiment is provided as shown in FIG. 14 comprising an FPMAC unit 140 having its internal resources exposed to the processor's internal buses 215L, 215H of the programmable processor, so they can be used by operations other than multiply-accumulate. The FPMAC unit 140 of FIG. 14 comprises a Floating-Point Multiplication unit 140-A forming a first pipeline section and a Floating-Point Adder/Subtracter 140-B forming a second pipeline section. Part of the Floating-Point Multiplication unit 140-A is formed by the integer multiplier section 131, discussed with reference to FIG. 13. An exponent processing section 141, the integer multiplier section 131 and a rounding/normalization section 138 together form the Floating-Point Multiplication unit 140-A.

The FPMAC's two inputs (of, say, 16-bits each) come from the processor's internal buses 215L, 215R and enter the FPMAC unit at the exponents processing section 141. Therein, the exponents of the two inputs are processed. Thereafter, the mantissas of the two inputs are latched by internal pipeline registers 132-X and 132-Y. From there they enter the integer multiplier 131, which multiplies the mantissas together. But the input registers 132-X, 132-Y to the integer multiplier can also directly latch values from the processor's internal buses, so that the integer multiplier 131 can also be used as a standalone integer multiplier, not just as part of the FPMAC unit 140. The selection of one of these is controlled by an Input Select signal IS from the instruction decoder 213 (the decoder is not shown). Therewith, the instruction decoder 213 controls the input selection of a multiplexer, as shown for the multiplexers 135 in FIG. 13, or controls the selection with an active Output Enable signal to a tri-state buffer that provides the input to be selected (now shown). In a similar manner, the input selection is enabled in other stages of the pipeline.

As in the example shown in FIG. 13, the integer multiplier 131 used in the FPMAC 140 has three pipeline stages. Likewise, the internal registers 136-1, 136-2 can also latch values from the processor's internal buses 215L, 215H, so that the carry-propagate adder 137 at the last stage of the integer multiplier's pipeline can be used as a standalone integer Adder (or as part of an ALU) as well. The output of the integer multiplier (which is double precision, i.e., 32-bits in the embodiment in question) is latched into internal pipeline register 24 (integer multiplier result) and can be made controllably available to the processor's internal buses 215L, 215H by an Output Enable (OE) signal from the instruction decoder 213, from where it can then be latched into general-purpose registers in the register file (e.g. 217 in FIG. 11). This is how other operations can use both the integer multiplier 131 and the carry-propagate adder 137 outside multiply-accumulate functions. Under regular FPMAC usage, however, the contents of the internal pipeline register 24 are further processed with rounding and normalization in unit 138, producing the final result of the floating-point multiplication operation.

Internal registers 144-A and 144-B can either latch a value from the processor's internal buses 215L, 215H or from the output of unit 138 (the final result of the floating-point multiplication operation). Internal registers 144-A and 144-B can also make their contents available to the processor's internal buses 215L, 215H and/or to the subsequent stages of the Floating-Point Adder/Subtracter unit 140-B. The Floating-Point Adder/Subtracter unit 140-B, which works as floating-point accumulator, writes its result to either register 144-A or 144-B via a direct feedback loop that bypasses the processor's internal busses 215L, 215H. Under multiply-accumulate (FPMAC) operation, the rounding/normalization stage 138 of the floating-point multiplier 140-A writes a value directly to either register 144-A or 144-B, bypassing the processor's internal busses 215L, 215H. The Floating-Point Adder/Subtracter unit 140-B then adds that value to the current accumulated value (in the other one of registers 144-A or 144-B) and the accumulation is updated with the new value. When not operating as FPMAC unit, the Floating-Point Adder/Subtracter unit 140-B simply adds or subtracts the values in registers 144-A and 144-B, which will have been loaded from the processor's internal buses 215L, 215H. The result is then itself written into one of registers 144-A or 144-B, from which it can then be latched by a general-purpose register in the register file (e.g. 217 in FIG. 11) via the internal bus 215. A still further embodiment may be contemplated wherein the Floating-Point Adder/Subtracter unit 140-B is pipelined with internal registers 142, 144, therewith separating each of the three computation blocks: exponents compare and alignment shift 141; mantissa processing 143; and shift/rounding 145. This modification may be contemplated to allow an independent use of these computation blocks.

In the claims the word "comprising" does not exclude other elements or steps, and the indefinite article "a" or "an" does not exclude a plurality. A single component or other unit may fulfill the functions of several items recited in the claims. The mere fact that certain measures are recited in mutually different claims does not indicate that a combination of these measures cannot be used to advantage. Any reference signs in the claims should not be construed as limiting the scope.

## Claims

1. A processor system (1), for performing neural network computations, comprising a plurality of synchronously operating processor clusters (2) arranged in a two-dimensional array, wherein a first plurality of processor clusters in a first column of the array are logically coupled to a second plurality of processor clusters in a second, directly adjacent column by at least one shared external bus (3, 3a), each processor cluster comprising:
at least one processor unit (21, 21') comprising a programmable processor (211) and an instruction memory (212);
a data memory (23) having a data memory address port (231) and a data memory data port (232);
a first cluster internal bus (41) which is accessible for each of the processor units (21, 21'), said first cluster internal bus being logically coupled to the data memory address port (231);
a second cluster internal bus (42) which is accessible for each of the processor units (21, 21'), said second cluster internal bus being logically coupled to the data memory data port (232);
wherein:
the processor system is configured to allow a first programmable processor (211) of one of the first plurality of processor clusters to write a value to the at least one shared external bus and to allow a plurality of other programmable processors (211) comprised in the second plurality of processor clusters to concurrently read the value from the at least one external bus;
the programmable processor comprises one or more processor's internal bus(es) (215), at least one of said one or more processor's internal bus(es) being logically coupled to the second cluster internal bus (42), and at least one of said one or more processor's internal bus(es) being logically coupled to at least one of the plurality of external buses (3, 3a).

2. The processor system according to claim 1, further comprising a neural network mapper (7) configured to supply the processor clusters (2aa, ..., 2an, 2ba, ..., 2bn) of the processor system (1) with configuration data for an artificial neural network, ANN, the configuration data comprising program data to be executed by the programmable processors of the processor clusters, wherein the program data for said first programmable processor (211) comprises at least one instruction to perform a first neural computation of at least a first neural element of a neural network layer of the ANN and the program data for said plurality of other programmable processors (211) comprises at least one respective instruction to perform second neural computations of respective second neural elements of a subsequent neural network layer of the ANN and wherein the program data further comprises at least one further instruction that causes said first programmable processor (211) to write a value resulting from the first neural computation to the at least one shared external bus and respective second further instructions that cause said plurality of other programmable processors (211) to concurrently read the value from the at least one external bus in order to implement network connections from the at least a first neural element to the respective second neural elements.

3. The processor system according to claim 1 or 2, wherein:
the second cluster internal bus (42) is logically coupled to the at least one external bus (3, 3a);
at least one of the one or more processor's internal bus(es) (215) is logically coupled to said at least one external bus (3, 3a) through the second cluster internal bus (42);
the first cluster internal bus (41) defines an address space with a first address range assigned for access to the data memory (23) and a second address range for access to said at least one external bus (3, 3a).

4. A processor system according to claim 3, wherein the at least one external bus (3, 3a) is logically coupled to the second cluster internal bus (42) via a controllable tristate multiplexer or demultiplexer (43), said controllable tristate multiplexer or demultiplexer (43) being controlled by logic (44) connected to the first cluster internal bus (41), said logic (44) connected to the first cluster internal bus (41) controlling the output-enable line of the tristate multiplexer or demultiplexer (43) depending on the address value present in the first cluster internal bus (41).

5. The processor system according to any of the preceding claims, wherein an instruction set of the programmable processor (211) comprises a first type of store instruction, with a first opcode, for writing to the data memory (23), and a second type of store instruction, with a second, different opcode, for writing to the at least one external bus (3, 3a), wherein the second type of store instruction takes longer to execute than the first type of store instruction, or wherein an instruction set of the programmable processor (211) comprises a wait instruction causing the programmable processor to prolong the duration of execution of a store instruction issued prior to the wait instruction.

6. The processor system according to any of the preceding claims, wherein the at least one processor unit (21) is one of a plurality of processor units (21, 21') and wherein the processor units of the plurality of processor units share the data memory (23).

7. The processor system according to any of the preceding claims, wherein the at least one processor unit (21, 21') comprises a decoding unit (213) to decode an instruction from the instruction memory (212) into an expanded format for controlling the programmable processor (211), said decoding unit (213) comprising a memory, said memory receiving the instruction from the instruction memory (212) at its address input lines and producing the instruction's expanded format at its data output lines, wherein the data output lines of the decoding unit (213) are logically coupled to the input control lines of internal resources of the programmable processor (211).

8. The processor system according to any of the preceding claims, wherein the programmable processor (211) comprises a three-stage pipeline, with an instruction fetch stage wherein an instruction is read from instruction memory (212) and latched in an instruction register (IR), an instruction decode stage wherein the instruction latched in the instruction register (IR) is translated into individual control signals that are then latched in a decoded instruction register (DIR), and an execution stage wherein an operation defined by the control signals latched in the decoded instruction register (DIR) is carried out and its result stored in a dedicated register (24, ALUR, MULR), an input of the dedicated register (24, ALUR, MULR) being hardwired to an output of the execution stage.

9. The processor system according to claim 8, wherein the output of the execution stage to which the input of the dedicated register (24, ALUR, MULR) is connected is the output of an execution unit (ALU, MULT) or another internal resource of the programmable processor (211) that produces an output, wherein an output of the dedicated register (24, ALUR, MULR) is coupled to another register (217) via a tristate buffer (25) and a processor's internal bus (215L, 215H), the tristate buffer (25) having an output-enable line (OE) controlled by the instruction decoder (213) in response to an instruction fetched from instruction memory (212).

10. The processor system according to claim 9, wherein an instruction set of the programmable processor (211) comprises a move instruction and/or a copy instruction in response to which the instruction decoder (213) causes a content of the dedicated register (24, ALUR, MULR) to be moved or copied to a different register (217) within the programmable processor (211).

11. The processor system according to any of the preceding claims, wherein a programmable processor (211) comprises at least one integer multiplier unit (131) comprising a pipeline with:
a Booth recoding stage (132);
a reduction of partial products stage (134);
an adder (137);
a dedicated result register (24);
a controllable tri-state buffer (25) coupled to a processor's internal bus (215, 215H, 215L, IBH, IBL), which can drive said processor's internal bus (215, 215H, 215L, IBH, IBL) with the contents of the dedicated result register (24);
a multiplexing circuit (135) to controllably select an input for the adder (137) from either an output of the reduction of partial products stage (134) or from the processor's internal bus (215, 215H, 215L, IBH, IBL).

12. The processor system according to claim 11, wherein the processor's internal bus (215, 215H, 215L, IBH, IBL) is controllably coupled to the second cluster internal bus (42) via a controllable tristate buffer (218a, 218c), said tristate buffer having an output-enable line (OE) controlled by the instruction decoder (213) in response to an instruction fetched from instruction memory (212).

13. The processor system according to any of the preceding claims, wherein the at least one shared external bus (3) is actively terminated with a pair of a first termination diode (35G) and a second termination diode (35V) for each of its signal lines, the first termination diode (35G) being configured to clamp the respective signal line to the associated ground reference voltage (GND) when the voltage level in said respective signal line decreases below the associated ground reference voltage minus a margin of tolerance, and the second termination diode (35V) being configured to clamp the respective signal line to the associated power supply reference voltage (Vcc) when the voltage level in said respective signal line exceeds the associated power supply reference voltage plus a margin of tolerance.

14. The processor system according to any of the preceding claims, comprising a common clock oscillator (8) for synchronizing operation of the processor clusters (2), the clock signal from said clock oscillator being distributed to the processor clusters (2) by a set of traces constituting a clock tree (81), wherein:
the respective signal paths for conducting the clock signal from the common clock oscillator to respective ones of the processor clusters (2) through the clock tree have substantially the same length;
wherein according to a first option each processor cluster has a clock buffer (83) to boost the clock signal received from the clock tree prior to distribution to the programmable processors (211) within the processor cluster (2);
wherein according to a second option all ends (811) of the clock tree (81) are actively terminated with a pair of termination diodes (85V, 85G), so as to reduce signal reflections, the first termination diode (85G) being configured to clamp the end of the clock tree to the associated ground reference voltage (GND) when the voltage level in said end decreases below the associated ground reference voltage minus a margin of tolerance, and the second termination diode (35V) being configured to clamp the end of the clock tree to the associated power supply reference voltage (Vcc) when the voltage level in said end exceeds the associated power supply reference voltage plus a margin of tolerance.

15. The processor system according to any of the preceding claims, implemented in a wafer bonded pair (5) of a first die (51) and a second die (52), wherein the data memory (23) is implemented on the first die and wherein the at least one processor unit (21, 2 1') and the first and the second cluster internal bus (41, 42) on the second die are electrically coupled with Through Silicon VIAs (TSVs, 53) to the data memory on the first die.
